# NEUE EUROPÄISCHE PATENTSCHRIFT

(11) **EP 0 824 113 B2**
(45) Veröffentlichungstag und Bekanntmachung des Hinweises auf die Entscheidung über den Einspruch: **27.06.2012**
(45) Hinweis auf die Patenterteilung: 20.06.2001
(21) Anmeldenummer: 97113406.9
(22) Anmeldetag: 04.08.1997
(51) Int. Cl.: C08F 4/603, C08F 10/00

(54) **Geträgertes Katalysatorsystem, Verfahren zu seiner Herstellung und seine Verwendung zur Polymerisation von Olefinen**
Supported catalyst, process for its preparation and its use in olefin polymerization
Système catalytique sur support, procédé pour sa préparation et son utilisation pour la polymérisation d'oléfines

(30) Priorität: 13.08.1996 DE 19632557; 28.08.1996 DE 19634703
(43) Veröffentlichungstag der Anmeldung: 18.02.1998
(73) Patentinhaber: Basell Polyolefine GmbH, 50389 Wesseling (DE)
(72) Erfinder: Fritze, Cornelia, Dr., 60529 Frankfurt (DE); Küber, Frank, Dr., 61440 Oberursel (DE); Bohnen, Hans, Dr., 65527 Niedernhausen (DE)

(56) Entgegenhaltungen:
- EP-A1- 0 522 581
- EP-A1- 0 705 849
- EP-A2- 0 811 627
- WO-A-95/24268
- WO-A-96/28480
- WO-A-96/41808
- WO-A1-91/09882
- WO-A1-94/03506
- DE-A1- 1 962 207
- US-A- 5 347 024
- US-A- 5 447 895
- US-A- 5 496 960

## Beschreibung

Die vorliegende Erfindung betrifft ein geträgertes Katalysatorsystem, das vorteilhaft bei der Olefinpolymerisation eingesetzt werden kann und mindestens ein Metallocen, einen Träger und einen Cokatalysator, der kein Aluminoxan beinhaltet, enthält sowie ein Verfahren zu dessen Herstellung.

Verfahren zur Herstellung von Polyolefinen mit Hilfe von löslichen, homogenen Katalysatorsystemen sind bekannt, bestehend aus einer Übergangsmetallkomponente vom Typ eines Metallocens und einer CokatalysatorKomponente vom Typ eines Aluminoxans, einer Lewis-Säure oder einer ionischen Verbindung. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern. Weiterhin sind homogene Katalysatorsysteme nicht für die Herstellung von Polyolefinen in der Gasphase einsetzbar.

Zur Vermeidung der Belagsbildung im Reaktor sind geträgerte Katalysatorsysteme vorgeschlagen worden, bei denen das Metallocen und/oder der Cokatalysator auf einem anorganischen Trägermaterial fixiert werden.

Aus der EP-A-287 666 ist ein Verfahren zur Polymerisation von Olefinen in Gegenwart eines Katalysators bekannt, der aus einer Verbindung eines Übergangsmetalls, eines anorganischen Trägers, eines Aluminoxans und einer Organoaluminiumverbindung mit einer anderen Kohlenwasserstoffgruppe als n - Alkylgruppen als feste Katalysatorkomponente besteht, wobei die Übergangsmetallverbindung angegeben wird durch die Formel

R^{q}_{α} R^{r}_{β} R^{s}_{χ} R^{t}_{δ} Me,

worin R^{q} eine Cycloalkadienylgruppe bedeutet, R^{r}, R^{s} und R^{t} gleich oder verschieden sind und jeweils eine Cycloalkadienylgruppe, eine Arylgruppe, eine Alkylgruppe, eine Arylalkylgruppe, ein Halogenatom oder ein Wasserstoffatom bedeuten, Me Zirkonium, Titan oder Hafnium bedeutet, α 1, 2, 3 oder 4 ist, β, χ und δ 0, 1, 2 oder 3 sind und α+β+χ+δ=4 ist. Mit diesem Verfahren werden Polymere mit einem geträgerten Metallocen/Aluminoxan-System in guten Ausbeuten erhalten.

Aus der EP-A-336 593 ist ein Verfahren zur Herstellung eines mit einem Träger versehenen Metallocen/Aluminoxan-Katalysators zur Olefinpolymerisation bekannt, bei dem Aluminiumtrialkyl und Wasser in Gegenwart eines wasserabsorbierenden Feststoffmaterials mit einem Molverhältnis von Aluminiumtrialkyl zu Wasser von 10:1 bis 1:1 umgesetzt werden und ein Metallocen eines Übergangmetalls zu der umgesetzten Mischung gegeben wird, wobei das Wasser vor der Umsetzung durch das Feststoffmaterial in einer Menge von 10 bis 50 Gew.-% absorbiert wird, das wasserhaltige Feststoffmaterial zu einer Lösung von Aluminiumtrialkyl gegeben wird und das Molverhältnis von Aluminium zu Metallocen-Übergangsmetall 1000:1 bis 1:1 beträgt. Mit diesem Verfahren wird der Cokatalysator vom Typ eines Aluminoxans auf dem Träger immobilisiert und ein Polyolefin in guten Ausbeuten erhalten.

Aluminoxane als bislang wirksamste Cokatalysatoren haben den Nachteil in hohem Überschuß eingesetzt zu werden. Es sind aber auch aluminoxanfreie Cokatalysatoren bekannt, die stöchiometrisch eingesetzt werden können und das Metallocen in eine kationische, Verbindung überführen. Die Rolle von kationischen Komplexen bei der Ziegler-Natta-Polymerisation mit Metallocenen ist allgemein anerkannt (M. Bochmann, Nachr. Chem. Lab. Techn. 1993, 41, 1220 ff).

Die Synthese kationischer Alkylkomplexe gelingt durch
a) Protolyse von Metallocenverbindungen mit beispielsweise schwach sauren Ammoniumsalzen des sehr stabilen, nicht basischen Tetra(pentafluorophenyl)-boratanions (z.B. [PhMe₂NH]⁺[B(C₆F₅)₄]⁻),
b) durch Abstraktion einer Alkylgruppe aus Metallocenverbindungen mit Hilfe von starken Lewis-Säuren, wobei als Lewis-Säuren sowohl Salze der Form (Ph₃C⁺BR₄⁻) als auch starke, neutrale Lewis-Säuren wie B(C₆F₅)₃ dienen können oder durch
c) Oxidation von Metallocendialkyl-Komplexen mit beispielsweise AgBPh₄ oder [Cp₂Fe][BPh₄].

In EP-A-427697 wird die Synthese von kationischen Metallocenkatalysatoren durch Alkylabstraktion von einer Metallocenalkylverbindung mittels Tris(pentafluorophenyl)boran beansprucht. Ein Verfahren zur Herstellung von Salzen der allgemeinen Form LMX⁺ XA⁻ nach dem oben beschriebenen Prinzip wird in EP-A-520732 beansprucht.

EP-A-558158 beansprucht zwitterionische Katalysatorsysteme, die aus Metallocendialkyl-Verbindungen und Salzen der Form [R₃NH]⁺[BPh₄]⁻ dargestellt werden. Die Umsetzung eines solchen Salzes mit z.B. Cp^{*}₂ZrMe₂ liefert durch Protolyse unter Methanabspaltung intermediär ein Zirkonocenmethylkation. Dieses' reagiert über C-H-Aktivierung zum Zwitterion Cp^{*}₂Zr⁺-(m-C₆H₄)-BPh₃⁻ ab.

Nach diesem Reaktionsprinzip entsteht nach der Protolyse einer Metallocendialkylspezies mit einem perfluorierten [R₃NH]⁺[B(C₆F₅)₄]⁻-Salz im ersten Schritt ebenfalls eine kationische Spezies, wobei nun die Folgereaktion (C-H-Aktivierung) zu zwitterionischen Komplexen nicht möglich ist. Es entstehen so Salze der Form [Cp₂Zr-R-RH]⁺[B(C₆F₅)₄]⁻. In US-A-5348299 werden entsprechende Systeme beansprucht, wobei Dimethylaniliniumsalze mit perfluorierten Tetraphenylboratanionen verwendet werden. Die Trägerung solcher Systeme dient einer besseren Morphologie des Polymers und wird in WO 9109882 beschrieben.

In DE 4 431 837 wird ein geträgertes Metallocen-Katalysatorsystem beansprucht, erhältlich durch das Aufbringen einer Mischung aus mindestens einem Metallocenkomplex und mindestens einer Metallverbindung auf einen Träger, der gegebenenfalls vorbehandelt sein kann und anschließender Aktivierung durch Umsetzung mit einer Lösung oder Suspension einer metallocen-imisionenbildenden Verbindung. Diese Katalysatorsysteme zeichnen sich dadurch aus, daß sie zu einem beliebigen Zeitpunkt aktivierbar sind.

In EP-A-627 448 wird ein geträgerter ionischer Metallocen-Katalysator für die Polyolefinherstellung beansprucht. Dieser Katalysator besteht aus einem Metallocen der 4. Nebengruppe des Periodensystems der Elemente und einem ionischen Aktivator und eignet sich für die Polymerisation von Olefinen ohne Aluminoxan als Cokatalysator.

In WO 95 14 044 ist ein geträgertes Katalysatorsystem aus den Komponenten a) Monocyclopentadienyl-komplex der 4. Nebengruppe des Periodensystems der Elemente, b) ionischer Aktivator und c) geträgerter metallorganische Verbindung, wobei a) und b) optimal auch separat von c) geträgert sein können. Dieses Katalysatorsystem eignet sich zur Polymerisation von Olefinen ohne eine Aluminoxan-Verbindung als Cokatalysator.

Die Aufgabe der vorliegenden Erfindung liegt darin, ein geträgertes Katalysatorsystem mit dem Polymere mit hoher Aktivität erhalten werden und ein umweltschonendes und wirtschaftliches Verfahren zur Herstellung der Polymere bereitzustellen, das auf die Verwendung eines großen Überschußes an Cokatalysator verzichtet.

Die der vorliegenden Erfindung zugrundeliegende Aufgabe wird durch ein Katalysatorsystem gemäß Anspruch 1 gelöst, das mindestens eine Übergangsmetallverbindung wie ein Metallocen, mindestens einen Träger und mindestens einen Cokatalysator, der kein Aluminoxan beinhaltet, enthält, wobei Übergangsmetallverbindung und Cokatalysator am Träger nicht kovalent gebunden sind.

Das Katalysatorsystem wird erfindungsgemäß hergestellt, indem mindestens eine Übergangsmetallverbindung wie ein Metallocen, mindestens ein Träger und mindestens ein Cokatalysator gemischt werden.

Als Metallocenkomponente des erfindungsgemäßen Katalysatorsystems kann grundsätzlich jedes Metallocen dienen. Bevorzugt sind chirale Metallocene. Darüber hinaus können weitere Substituenten, wie z. B. Halogen-, Alkyl-, Alkenyl-, Alkoxy-, Aryl- oder Alkylaryl-Gruppen an das Metallzentralatom gebunden sein. Das Metallzentralatom ist bevorzugt ein Element der III., IV., V. oder VI. Nebengruppe des Periodensystems der Elemente, insbesondere aus der IV. Nebengruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl, Indenyl, 2-Methylindenyl, 2-Methyl-4-phenylindenyl, Tetrahydroindenyl, Benzoindenyl, Fluorenyl, Benzofluorenyl, Tetrahydrofluorenyl, Octahydrofluorenylreste zu verstehen. Die Π-Liganden, z. B. Cyclopentadienylliganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkerniger Metallocene können sowohl gleichartig als auch voneinander verschieden sein. Beispiele solcher mehrkerniger Metallocene sind z. B. beschrieben in (EP-A-632063, JP-A-04/80214, JP-A-04/85310, EP-A-654476).

Die Bezeichnung Metallocen umfaßt außerdem Monocyclopentadienylsysteme wie verbrückte Cyclopentadienylamido-Komplexe.

Besonders bevorzugt sind unverbrückte oder verbrückte Metallocene der Formel I, 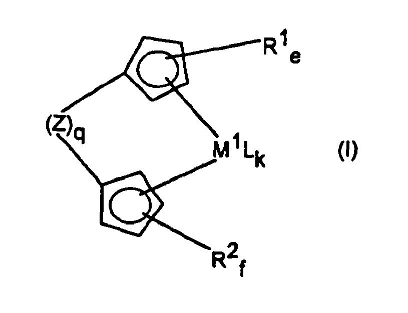 worin
- M¹: ein Metall der III., IV., V. oder VI. Nebengruppe des Periodensystems der Elemente ist, insbesondere Zr oder Hf,
- R¹: gleich oder verschieden sind und ein Wasserstoffatom, SiR³₃,worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀- kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- R²: gleich oder verschieden sind und ein Wasserstoffatom, SiR³₃, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- e: gleich 5 für q = 0, und n gleich 4 für q = 1 ist,
- f: gleich 5 für q = 0, und m gleich 4 für q = 1 ist,
- L: gleich oder verschieden sind und ein Halogenatom oder einen kohlenwasserstoffhaltigen Rest mit 1-20 Kohlenstoffatomen bedeuten, z. B. C₁-C₂₀-Alkyl, C₂-C₂₀-Alkenyl, C₁-C₂₀-Alkoxy, C₆-C₁₄-Aryloxy oder C₆-C₄₀-Aryl,
- k: eine ganze Zahl von 1 bis 4 ist, wobei im Falle von M¹ = Ti, Zr oder Hf k bevorzugt gleich 2 ist,
- Z: ein verbrückendes Strukturelement zwischen den beiden Cyclopentadienylringen bezeichnet, und q ist 0 oder 1.

Beispiele für Z sind Gruppen M²R⁴R⁵, worin M² Kohlenstoff, Silizium, Germanium oder Zinn ist und R⁴ und R⁵ gleich oder verschieden eine C₁-C₂₀-kohlenstoffhaltige Gruppe wie C₁-C₁₀-Alkyl oder C₆-C₁₄-Aryl-Gruppe bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (CH₃)₃SiSiCH₃, (C₆H₅)₂Sn, (CH₂)₄Si, CH₂Si(CH₃)₂, o-C₆H₄ oder 2,2'-(C₆H₄)₂. Z kann auch mit einem oder mehreren Resten R¹ und/oder R² ein mono- oder polycyclisches Ringsystem bilden.

Bevorzugt sind chirale verbrückte Metallocene der Formel I, insbesondere solche in denen q gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7- oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Die nachfolgenden Beispiele für Metallocene dienen der Illustration der vorliegenden Erfindung, haben aber keinen einschränkenden Charakter:
Bis(cyclopentadienyl)zirkoniumdimethyl
Bis(indenyl)zirkoniumdimethyl
Bis(fluorenyl)zirkoniumdimethyl
(Indenyl)(fluorenyl)zirkoniumdimethyl
(3-Methyl-5-naphthylindenyl)(2,7-di-tert-butylfluorenyl)zirkoniumdimethyl
(3-Methyl-5-naphthylindenyl)(3,4,7-trimethoxyfluorenyl)zirkoniumdimethyl
(Pentamethylcyclopentadienyl)(tetrahydroindenyl)zirkoniumdimethyl
(Cyclopentadienyl)(1-octen-8-ylcyclopentadienyl)zirkoniiumdimethyl
(Indenyl)(1-buten-4-ylcyclopentadienyl)zirkoniumdimethyl
[1,3-Bis(trimethylsilyl)cyclopentadienyl](3,4-benzofluorenyl)zirkoniumdimethyl
Bis(cyclopentadienyl)titandimethyl
Dimethylsilandiylbis(indenyl)zirkoniumdimethyl
Dimethylsilandiylbis(fluorenyl)zirkoniumdimethyl
Dimethylsilandiylbis(tetrahydroindenyl)zirkoniumdimethyl
Dimethylsilandiyl(cyclopentadienyl)(indenyl)zirkoniumdiimethyl
Dimethylsilandiyl(cyclopentadienyl)(fluorenyl)zirkoniumdimethyl
Dimethylsilandiylbis(2-methylindenyl)zirkoniumdimethyll
Dimethylsilandiylbis(2-ethylindenyl)zirkoniumdimethyl
Dimethylsilandiylbis(2-methyl-4,5-benzoindenyl)zirkoniumdimethyl
Dimethylsilandiylbis(2-methyl-5,6-benzoindenyl)zirkoniumdimethyl
Dimethylsilandiylbis(2-ethyl-4,5-benzoindenyl)zirkoniumdimethyl
Dimethylsilandiylbis(4,5-dihydro-8-methyl-7H-cyclopent[e]acenaphthylen-7-yliden)zirkoniumdimethyl
Dimethylsilandiyl(2-methyl-4,5-benzoindenyl)(2-methyl-4-phenylindenyl)zirkoniumdimethyl
Dimethylsilandiyl(2-ethyl-4,5-benzoindenyl)(2-methyl4-phenylindenyl)zirkoniumdimethyl
Dimethylsilandiyl(2-methyl-4,5-benzoindenyl)(2-ethyl-4-phenylindenyl)zirkoniumdimethyl
Dimethylsilandiyl(2-ethyl-4,5-benzoindenyl)(2-ethyl-4-naphthylindenyl)zirkoniumdimethyl
Dimethylsilandiyl(2-methylindenyl)(4-phenylindenyl)zirkoniumdimethyl
Dimethylsilandiylbis(2-methyl-4-phenylindenyl)zirkoniumdimethyl
Dimethylsilandiylbis(2-ethyl-4-phenylindenyl)zirkoniumdimethyl
Dimethylsilandiylbis(2-methyl-4,6-diisopropylindenyl)zirkoniumdimethyl
Dimethylsilandiylbis(2-ethyl-4,6-diisopropylindenyl)zirkoniumdimethyl
Dimethylsilandiylbis(2-methyl-4-(1)-naphthyl)indenyl)zirkoniumdimethyl
Dimethylsilandiylbis(2-methyl-4-(2)-naphthyl)indenyl)zirkoniumdimethyl
Dimethylsilandiylbis(2-ethyl-4-(1)-naphthylindenyl)zirkoniumdimethyl
Dimethylsilandiylbis(2-ethyl-4-(2)-naphthylindenyl)zirkoniumdimethyl
Dimethylsilandiylbis(2-trimethylsilylindenyl)zirkoniumdimethyl
Dimethylsilandiylbis(4-(1)-naphthylindenyl)zirkoniumdimethyl
Dimethylsilandiylbis(2-methyl-4t-butylindenyl)zirkoniumdimethyl
Dimethylsilandiylbis(2-methyl-4-isopropylindenyl)zirkoniumdimethyl
Dimethylsilandiylbis(2-ethylindenyl)zirkoniumdimethyl
Dimethylsilandiylbis(2,4-diethylindenyl)zirkoniumdimethyl
Dimethylsilandiylbis(2,4-dimethylindenyl)zirkoniumdimethyl
Dimethylsilandiylbis(2-methyl-5-fluorenylindenyl)zirkoniumdimethyl
Dimethylsilandiylbis(2,4,6-trimethylindenyl)zirkoniumdimethyl
Dimethylsilandiylbis(2,5,6-trimethylindenyl)zirkoniumdimethyl
Dimethylsilandiylbis(2,4,7-trimethylindenyl)zirkoniumdimethyl
Dimethylsilandiylbis(2-methyl-5-t-butylindenyl)zirkoniumdimethyl
Diphenylsilandiylbis(indenyl)zirkoniumdimethyl
Diphenylsilandiylbis(fluorenyl)zirkoniumdimethyl
Diphenylsilandiylbis(tetrahydroindenyl)zirkoniumdimethyl
Diphenylsilandiyl(cyclopentadienyl)(indenyl)zirkoniumdimethyl
Diphenylsilandiyl(cyclopentadienyl)(fluorenyl)zirkoniumdimethyl
Diphenylsilandiylbis(2-methylindenyl)zirkoniumdimethyl
Diphenylsilandiylbis(2-methyl-4,5-benzoindenyl)zirkoniumdimethyl
Diphenylsilandiylbis(2-ethyl-4,5-benzoindenyl)zirkoniumdimethyl
Diphenylsilandiylbis(4,5-dihydro-8-methyl-7H-cyclopent[e]acenaphthylen-7-yliden)zirkoniumdimethyl
Diphenylsilandiyl(2-methyl-4,5-benzoindenyl)(2-ethyl-4-phenylindenyl)zirkoniumdimethyl
Diphenylsilandiyl(2-ethyl-4,5-benzoindenyl)(2-ethyl-4-naphthylindenyl)zirkoniumdimethyl
Diphenylsilandiyl(2-methylindenyl)(4-phenylindenyl)zirkoniumdimethyl
Diphenylsilandiylbis(2-methyl-4-phenylindenyl)zirkoniumdimethyl
Diphenylsilandiylbis(2-ethyl-4-phenylindenyl)zirkoniumdimethyl
Diphenylsilandiylbis(2-methyl-4,6-diisopropylindenyl)zirkoniumdimethyl
Diphenylsilandiylbis(2-ethyl-4,6-diisopropylindenyl)zirkoniumdimethyl
Diphenylsilandiylbis(2-methyl-4-(1)-naphthyl)indenyl)zirkoniumdimethyl
Diphenylsilandiylbis(2-ethyl-4-(1)-naphthylindenyl)zirkoniumdimethyl
Diphenylsilandiylbis(2-trimethylsilylindenyl)zirkoniumdimethyl
Diphenylsilandiylbis(4-(1)-naphthylindenyl)zirkoniumdimethyl
Diphenylsilandiylbis(2-methyl-4t-butylindenyl)zirkoniumdimethyl
Diphenylsilandiylbis(2-ethylindenyl)zirkoniumdimethyl
Diphenylsilandiylbis(2,4-dimethylindenyl)zirkoniumdimethyl
Diphenylsilandiylbis(2-methyl-5-fluorenylindenyl)zirkoniumdimethyl
Diphenylsilandiylbis(2,4,6-trimethylindenyl)zirkoniumdirnethyl
Diphenylsilandiylbis(2-methyl-5-t-butylindenyl)zirkoniunndimethyl
Methylphenylsilandiylbis(indenyl)zirkoniumdimethyl
Methylphenylsilandiylbis(fluorenyl)zirkoniumdimethyl
Methylphenylsilandiylbis(tetrahydroindenyl)zirkoniumdimethyl
Methylphenylsilandiyl(cyclopentadienyl)(indenyl)zirkoniumdimethyl
Methylphenylsilandiyl(cyclopentadienyl)(fluorenyl)zirkoniumdimethyl
Methylphenylsilandiylbis(2-methylindenyl)zirkoniumdimethyl
Methylphenylsilandiylbis(2-methyl-4,5-benzoindenyl)zirkoniumdimethyl
Methylphenylsilandiylbis(2-ethyl-4,5-benzoindenyl)zirkoniumdimethyl
Methylphenylsilandiylbis(4,5-dihydro-8-methyl-7H-cycllopent[e]acenaphthylen-7-yliden)zirkoniumdimethyl
Methylphenylsilandiyl(2-methyl-4,5-benzoindenyl)(2-ethyl-4-phenylindenyl)zirkoniumdimethyl
Methylphenylsilandiyl(2-ethyl-4,5-benzoindenyl)(2-ethyl-4-naphthylindenyl)zirkoniumdimethyl
Methylphenylsilandiyl(2-methylindenyl)(4-phenylindenyl)zirkoniumdimethyl
Methylphenylsilandiylbis(2-methyl-4-phenylindenyl)zirkoniumdimethyl
Methylphenylsilandiylbis(2-ethyl-4-phenylindenyl)zirkoniumdimethyl
Methylphenylsilandiylbis(2-methyl-4,6-diisopropylindenyl)zirkoniumdimethyl
Methylphenylsilandiylbis(2-ethyl-4,6-diisopropylindenyl)zirkoniumdimethyl
Methylphenylsilandiylbis(2-methyl-4-(1)-naphthyl)indenyl)zirkoniumdimethyl
Methylphenylsilandiylbis(2-ethyl-4-(1)-naphthylindenyl)zirkoniumdimethyl
Methylphenylsilandiylbis(2-trimethylsilylindenyl)zirkoniumdimethyl
Methylphenylsilandiylbis(4-(1)-naphthylindenyl)zirkoniumdimethyl
Methylphenylsilandiylbis(2-methyl-4t-butylindenyl)zirkoniumdimethyl
Methylphenylsilandiylbis(2-ethylindenyl)zirkoniumdimethyl
Methylphenylsilandiylbis(2,4-dimethylindenyl)zirkoniumdimethyl
Methylphenylsilandiylbis(2-methyl-5-fluorenylindenyl)zirkoniumdimethyl
Methylphenylsilandiylbis(2,4,6-trimethylindenyl)zirkoniumdimethyl
Methylphenylsilandiylbis(2-methyl-5-t-butylindenyl)zirkoniumdimethyl
Ethylen-1,2-bis(indenyl)zirkoniumdimethyl
Ethylen-1,2-bis(fluorenyl)zirkoniumdimethyl
Ethylen-1,2-bis(tetrahydroindenyl)zirkoniumdimethyl
Ethylen-1,2-(cyclopentadienyl)(indenyl)zirkoniumdimethyl
Ethylen-1,2-(cyclopentadienyl)(fluorenyl)zirkoniumdimethyl
Ethylen-1,2-bis(2-methylindenyl)zirkoniumdimethyl
Ethylen-1,2-bis(2-methyl-4,5-benzoindenyi)zirkoniumdimethyi
Ethylen-1,2-bis(2-ethyl-4,5-benzoindenyl)zirkoniumdimethyl
Ethylen-1,2-bis(4,5-dihydro-8-methyl-7H-cyclopent[e]acenaphthylen-7-yliden)zirkoniumdimethyl
Ethylen-1,2-(2-methyl-4,5-benzoindenyl)(2-ethyl-4-phenylindenyl)zirkoniumdimethyl
Ethylen-1,2-(2-ethyl-4,5-benzoindenyl)(2-ethyl-4-naphthylindenyl)zirkoniumdimethyl
Ethylen-1,2-(2-methylindenyl)(4-phenylindenyl)zirkoniumdimethyl
Ethylen-1,2-bis(2-methyl-4-phenylindenyl)zirkoniumdimethyl
Ethylen-1,2-bis(2-ethyl-4-phenylindenyl)zirkoniumdimethyl
Ethylen-1,2-bis(2-methyl-4,6-diisopropylindenyl)zirkoniumdimethyl
Ethylen-1,2-bis(2-ethyl-4,6-diisopropylindenyl)zirkoniumdimethyl
Ethylen-1,2-bis(2-methyl-4-(1)-naphthyl)indenyl)zirkoniumdimethyl
Ethylen-1,2-bis(2-ethyl-4-(1)-naphthylindenyl)zirkoniumdimethyl
Ethylen-1,2-bis(2-trimethylsilylindenyl)zirkoniumdimethyl
Ethylen-1,2-bis(4-(1)-naphthylindenyl)zirkoniumdimethyl
Ethylen-1,2-bis(2-methyl-4t-butylindenyl)zirkoniumdimethyl
Ethylen-1,2-bis(2-ethylindenyl)zirkoniumdimethyl
Ethylen-1,2-bis(2,4-dimethylindenyl)zirkoniumdimethyl
Ethylen-1,2-bis(2-methyl-5-fluorenylindenyl)zirkoniumdimethyl
Ethylen-1,2-bis(2,4,6-trimethylindenyl)zirkoniumdimethyl
Ethylen-1,2-bis(2-methyl-5-t-butylindenyl)zirkoniumdimethyl 1 -Silacyclopentan-1,1-bis(indenyl)zirkoniumdimethyl
1-Silacyclopentan-1,1-bis(2-methylindenyl)zirkoniumdimethyl 1 -Silacyclopentan-1,1-bis(2-ethylindenyl)zirkoniumdimethyl
1-Silacyclopentan-1,1-bis(2-methyl-4,5-benzoindenyl)zirkoniumdimethyl
1-Silacyclopentan-1,1-bis(2-ethyl-4,5-benzoindenyl)zirkoniumdimethyl
1 -Silacyclopentan-1-(2-ethyl-4,5-benzoindenyl)-1 -(2-methyl-4-phenylindenyl)zirkoniumdimethyl
1 -Silacyclopentan-1,1-bis(2-methyl-4-phenylindenyl)zirkoniumdimethyl
1 -Silacyclopentan-1,1-bis(2-ethyl-4-phenylindenyl)zirkoniumdimethyl
1 -Silacyclopentan-1,1-bis(2-methyl-4,6-diisopropylindenyl)zirkoniumdimethyl
1 -Silacyclopentan-1,1-bis(2-methyl-4-naphthylindenyl)zirkoniumdimethyl
1 -Silacyclopentan-1,1-bis(2-ethyl-4-naphthylindenyl)zirkoniumdimethyl
Propylen-2,2-bis(indenyl)zirkoniumdimethyl
Propylen-2-cyclopentadienyl-2-(1-indenyl)zirkoniumdimethyl
Propylen-2-cyclopentadienyl-2-(4-phenyl-1-indenyl)zirkoniumdimethyl
Propylen-2-cyclopentadienyl-2-(9-fluorenyl)zirkoniumdimethyl
Propylen-2-cyclopentadienyl-2-(2,7-dimethoxy-9-fluorenyl)zirkoniumdimethyl
Propylen-2-cyclopentadienyl-2-(2,7-di-tert-butyl-9-fluorenyl)zirkoniumdimethyl
Propylen-2-cyclopentadienyl-2-(2,7-dibromo-9-fluorenyl)zirkoniumdimethyl
Propylen-2-cyclopentadienyl-2-(2,7-diphenyl-9-fluorenyl)zirkoniumdimethyl
Propylen-2-cyclopentadienyl-2-(2,7-dimethyl-9-fluorenyl)zirkoniumdimethyl
Propylen-2-(3-methylcyclopentadienyl)-2-(2,7-dibutyl-9-fluorenyl)zirkoniumdimethyl
Propylen-2-(3-tert-butylcyclopentadienyl)-2-(2,7-dibutyl-9-fluorenyl)zirkoniumdimethyl
Propylen-2-(3-trimethylsilylcyclopentadienyl)-2-(3,6-di-tert-butyl-9-fluorenyl)zirkoniumdimethyl
Propylen-2-cyclopentadienyl-2-[2,7-bis(3-buten-1-yl)-9-fluorenyl]zirkoniumdimethyl
Propylen-2-cyclopentadienyl-2-(3-tert-butyl-9-fluorenyl)zirkoniumdimethyl
Propylen-2,2-bis(tetrahydroindenyl)zirkoniumdimethyl
Propylen-2,2-bis(2-methylindenyl)zirkoniumdimethyl
Propylen-2,2-bis(2-ethylindenyl)zirkoniumdimethyl
Propylen-2,2-bis(2-methyl-4,5-benzoindenyl)zirkoniumdimethyl
Propylen-2,2-bis(2-ethyl-4,5-benzoindenyl)zirkoniumdimethyl
Propylen-2,2-bis(4,5-dihydro-8-methyl-7H-cyclopent[e]acenaphthylen-7-yliden)zirkoniumdimethyl
Propylen-2-(2-methyl-4,5-benzoindenyl)-2-(2-methyl-4-phenylindenyl)zirkoniumdimethyl
Propylen-2-(2-methylindenyl)-2-(4-phenylindenyl)zirkoniumdimethyl
Propylen-2,2-bis(2-methyl-4-phenylindenyl)zirkoniumdimethyl
Propylen-2,2-bis(2-ethyl-4-phenylindenyl)zirkoniumdimethyl
Propylen-2,2-bis(2-methyl-4,6-diisopropylindenyl)zirkoniumdimethyl
Propylen-2,2-bis(2-methyl-4-naphthylindenyl)zirkoniumdimethyl
Propylen-2,2-bis(2-ethyl-4-naphthylindenyl)zirkoniumdimethyl
1,6-Bis[methylsilylbis(2-methyl-4-phenylindenyl)zirkoniumdimethyl]hexan
1,6-Bis[methylsilylbis(2-methyl-4,5-benzoindenyl)zirkoniumdimethyl]hexan
1,6-Bis[methylsilylbis(2-ethyl-4-phenylindenyl)zirkoniumdimethyl]hexan
1,6-Bis[methylsilylbis(2-methyl-4-naphthylindenyl)zirkoniumdimethyl]hexan
1,6-Bis[methylsilylbis(2-methyl-4,6-diisopropylindenyl)zirkoniumdimethyl]hexan
1,6-Bis[methylsilyl(2-methyl-4-phenylindenyl)(4,5-benzoindenyl)zirkoniumdimethyl]hexan
1-[Methylsilylbis(tetrahydroindenyl)zirkoniumdimethyl]-6-[ethylstannyl(cyclopentadienyl)-(fluorenyl)zirkoniumdimethyl]hexan
1,6-Disila-1,1,6,6-tetramethyl-1,6-bis[methylsilylbis(2-methyl-4-phenylindenyl)zirkonium-dimethyl]hexan
1,4-Disila-1,4-bis[methylsilylbis(2-methyl-4-phenylindenyl)zirkoniumdimethyl]cyclohexan
[1,4-Bis(1 -indenyl)-1,1,4,4-tetramethyl-1,4-disilabutan]bis(pentamethylcyclopentadienylzirkoniumdimethyl)
[1,4-Bis(9-fluorenyl)-1,1,4,4-tetramethyl-1,4-disilabutan]bis(cyclopentadienylzirkoniumdimethyl)
[1,4-Bis(1 -indenyl)-1,1,4,4-tetramethyl-1,4-disilabutan]bis(cyclopentadienylzirkoniumdimethyl)
[1-(1-indenyl)-6-(2-phenyl-1-indenyl)-1,1,6,6-tetraethyl-1,6-disila-4-oxahexan]bis(tert-butylcyclopentadienylzirkoniumdimethyl)
[1,10-Bis(2,3-dimethyl-1-indenyl)-1,1,10,10-tetramethyl-1,10-digermadecan]bis(2-methyl-4-phenylindenylzirkoniumdimethyl)
(1 -Methyl-3-tert-butylcyclopentadienyl)(1-phenyl-4-methoxy-7-chlorofluorenyl)zirkoniumdimethyl
(4,7-Dichloroindenyl)(3,6-dimesitylfluorenyl)zirkoniumdimethyl
Bis(2,7-di-tert-butyl-9-cyclohexylfluorenyl)zirkoniumdimethyl
(2,7-Dimesitylfluorenyl)[2,7-bis(1-naphthyl)fluorenyl]zirkoniumdimethyl
Dimethylsilylbis(fluorenyl)zirkoniumdimethyl
Dibutylstannylbis(2-methylfluorenyl)zirkoniumdimethyl
1,1,2,2-Tetraethyldisilandiyl(2-methylindenyl)(4-phenylfluorenyl)zirkoniumdimethyl
Propylen-1-(2-indenyl)-2-(9-fluorenyl)zirkoniumdimethyl
1,1 -Dimethyl-1 -silaethylenbis(fluorenyl)zirkoniumdimethyl
[4-(Cyclopentadienyl)-4,7,7-trimethyl(tetrahydroindenyl)]zirkoniumdimethyl
[4-(Cyclopentadienyl)4,7-dimethyl-7-phenyl(5,6-dimethyltetrahydroindenyl)]zirkoniumdimethyl
[4-(Cyclopentadienyl)-4,7-dimethyl-7-(1-naphthyl)(7-phenyltetrahydroindenyl)]zirkoniumdimethyl
[4-(Cyclopentadienyl)-4,7-dimethyl-7-butyl(6,6-diethyltetrahydroindenyl)]zirkoniumdimethyl
[4-(3-tert-Butylcyclopentadienyl)-4,7,7-trimethyl(tetrahydroindenyl)]zirkoniumdimethyl
[4-(1-Indenyl)-4,7,7-trimethyl(tetrahydroindenyl)]zirkoniumdimethyl
Bis(cyclopentadienyl)titandimethyl
Bis(cyclopentadienyl)hafniumdimethyl
Bis(indenyl)vanadiumdimethyl
Bis(fluorenyl)scandiumdimethyl
(Indenyl)(fluorenyl)niobiumdimethyl
(2-Methyl-7-naphthylindenyl)(2,6-di-tert-butylfluorenyl)titandimethyl
(Pentamethylcyclopentadienyl)(tetrahydroindenyl)hafniumbromidmethyl
(Cyclopentadienyl)(1-octen-8-ylcyclopentadienyl)hafniumdimethyl
(Indenyl)(2-buten-4-ylcyclopentadienyl)titandimethyl
[1,3-Bis(trimethylsilyl)cyclopentadienyl](3,4-benzofluorenyl)niobiumdimethyl
Dimethylsilandiylbis(indenyl)titandimethyl
Dimethylsilandiylbis(tetrahydroindenyl)hafniumdimethyl
Dimethylsilandiyl(cyclopentadienyl)(indenyl)titandimethyl
Dimethylsilandiylbis(2-methylindenyl)hafniumdimethyl
Dimethylsilandiylbis(2-ethylindenyl)scandiummethyl
Dimethylsilandiylbis(2-butyl-4,5-benzoindenyl)niobiumdimethyl
Dimethylsilandiylbis(2-ethyl-4,5-benzoindenyl)titandimethyl
Dimethylsilandiylbis(4,5-dihydro-8-methyl-7H-cyclopent[e]acenaphthylen-7-yliden)titandimethyl
Dimethylsilandiyl(2-methyl-4,5-benzoindenyl)(2-methyl-4-phenylindenyl)titandimethyl
Dimethylsilandiyl(2-ethyl-4,5-benzoindenyl)(2-methyl-4-phenylindenyl)hafniumdimethyl
Dimethylsilandiyl(2-methyl-4,5-benzoindenyl)(2-ethyl-4-phenylindenyl)scandiummethyl
Dimethylsilandiyl(2-ethyl-4,5-benzoindenyl)(2-ethyl-4-naphthylindenyl)titandimethyl
Dimethylsilandiyl(2-methylindenyl)(4-phenylindenyl)hafniumdimethyl
Dimethylsilandiylbis(2-methyl-4-phenylindenyl)niobiumdimethyl
Dimethylsilandiylbis(2-ethyl-4-phenylindenyl)vanadiumdimethyl
Dimethylsilandiylbis(2-methyl-4,6-diisopropylindenyl)hafniumdimethyl
Dimethylsilandiylbis(2-ethyl-4,6-diisopropylindenyl)vanadiumdimethyl
Dimethylsilandiylbis(2-methyl-4-naphthylindenyl)hafniumbromidmethyl
Dimethylsilandiylbis(2-ethyl-4-naphthylindenyl)titandimethyl
Methylphenylsilandiylbis(indenyl)titandimethyl
Methylphenylsilandiylbis(indenyl)titandimethyl
Methylphenylsilandiyl(cyclopentadienyl)(indenyl)hafniumdimethyl
Methylphenylsilandiylbis(tetrahydroindenyl)hafniumdimethyl
Methylphenylsilandiylbis(2-methylindenyl)titandimethyl
Methylphenylsilandiylbis(2-ethylindenyl)hafniumdimethyl
Methylphenylsilandiylbis(2-methyl-4,5-benzoindenyl)hafniumdimethyl
Methylphenylsilandiylbis(2-ethyl-4,5-benzoindenyl)vanadiumdimethyl
Methylphenylsilandiylbis(4,5-dihydro-8-methyl-7H-cyclopent[e]acenaphthylen-7-yliden)titandimethyl
Methylphenylsilandiyl(2-methyl-4,5-benzoindenyl)(2-methyl-4-phenylindenyl)titanbromidmethyl
Methylphenylsilandiyl(2-ethyl-4,5-benzoindenyl)(2-methyl-4-phenylindenyl)titandimethyl
Methylphenylsilandiyl(2-methyl-4,5-benzoindenyl)(2-ethyl-4-phenylindenyl)hafniumdimethyl
Methylphenylsilandiyl(2-ethyl-4,5-benzoindenyl)(2-ethyl-4-naphthylindenyl)hafniumdimethyl
Methylphenylsilandiyl(2-methylindenyl)(4-phenylindenyl)titandimethyl
Methylphenylsilandiylbis(2-methyl-4-phenylindenyl)hafniumdimethyl
Methylphenylsilandiylbis(2-ethyl-4-phenylindenyl)vanadiumdimethyl
Methylphenylsilandiylbis(2-methyl-4,6-diisopropylindenyl)titandimethyl
Methylphenylsilandiylbis(2-ethyl-4,6-diisopropylindenyl)hafniumdimethyl
Methylphenylsilandiylbis(2-methyl-4-naphthylindenyl)hafniumdimethyl
Methylphenylsilandiylbis(2-ethyl-4-naphthylindenyl)titandimethyl
Diphenylsilandiylbis(indenyl)titandimethyl
Diphenylsilandiylbis(2-methylindenyl)hafniumdimethyl
Diphenylsilandiylbis(2-ethylindenyl)titandimethyl
Diphenylsilandiyl(cyclopentadienyl)(indenyl)hafniumdimethyl
Diphenylsilandiylbis(2-methyl-4,5-benzoindenyl)titandimethyl
Diphenylsilandiylbis(2-ethyl-4,5-benzoindenyl)hafniumdimethyl
Diphenylsilandiyl(2-methyl-4,5-benzoindenyl)(2-methyl-4-phenylindenyl)hafniumdimethyl
Diphenylsilandiyl(2-ethyl-4,5-benzoindenyl)(2-methyl-4-phenylindenyl)titandimethyl
Diphenylsilandiyl(2-methyl-4,5-benzoindenyl)(2-ethyl-4-phenylindenyl)hafniumdimethyl
Diphenylsilandiyl(2-ethyl-4,5-benzoindenyl)(2-ethyl-4-naphthylindenyl)titandimethyl
Diphenylsilandiyl(2-methylindenyl)(4-phenylindenyl)titandimethyl
Diphenylsilandiylbis(2-methyl-4-phenylindenyl)titandimethyl
Diphenylsilandiylbis(2-ethyl-4-phenylindenyl)hafniumdimethyl
Diphenylsilandiylbis(2-methyl-4,6-diisopropylindenyl)hafniumdimethyl
Diphenylsilandiylbis(2-ethyl-4,6-diisopropylindenyl)hafniumdimethyl
Diphenylsilandiylbis(2-methyl-4-naphthylindenyl)hafniumdimethyl
Diphenylsilandiylbis(2-ethyl-4-naphthylindenyl)titandimethyl
1 -Silacyclopentan-1,1-bis(indenyl)hafniumdimethyl
1 -Silacyclopentan-1,1-bis(2-methylindenyl)hafniumdimethyl
1 -Silacyclopentan-1,1-bis(2-ethylindenyl)hafniumdimethyl
1-Silacyclopentan-1,1-bis(2-methyl-4,5-benzoindenyl)titandimethyl
1 -Silacyclopentan-1,1-bis(2-ethyl-4,5-benzoindenyl)hafniumdimethyl
1 -Silacyclopentan-1 -(2-methyl-4,5-benzoindenyl)-1 -(2-methyl-4-phenylindenyl)scandiummethyl
1-Silacyclopentan-1-(2-ethyl-4,5-benzoindenyl)-1-(2-methyl-4-phenylindenyl)hafniumdimethyl
1-Silacyclopentan-1-(2-methyl-4,5-benzoindenyl)-1-(2-ethyl-4-phenylindenyl)titandimethyl
1-Silacyclopentan-1-(2-ethyl-4, 5-benzoindenyl)-1-(2-ethyl-4-naphthylindenyl)hafniumdimethyl
1 -Silacyclopentan-1 -(2-methylindenyl)-1 -(4-phenylindenyl)hafniumdimethyl
1 -Silacyclopentan-1,1-bis(2-methyl-4-phenylindenyl)hafniumdimethyl
1 -Silacyclopentan-1,1-bis(2-ethyl-4-phenylindenyl)titanbromidmethyl
1 -Silacyclopentan-1,1-bis(2-methyl-4,6-diisopropylindenyl)titandimethyl
1 -Silacyclopentan-1,1-bis(2-ethyl-4,6-diisopropylindenyl)titandimethyl
1 -Silacyclopentan-1,1-bis(2-methyl-4-naphthylindenyl)scandiummethyl
1 -Silacyclopentan-1,1-bis(2-ethyl-4-naphthylindenyl)hafniumdimethyl
Bis(cyclopentadienyl)titandimethyl
Ethylen-1,2-bis(indenyl)scandiummethyl
Ethylen-1,2-bis(tetrahydroindenyl)titandimethyl
Ethylen-1-cyclopentadienyl-2-(1-indenyl)hafniumdimethyl
Ethylen-1-cyclopentadienyl-2-(2-indenyl)titanbromidmethyl
Ethylen-1-cyclopentadienyl-2-(2-methyl-1-indenyl)hafniumdimethyl
Ethylen-1,2-bis(2-methylindenyl)hafniumdimethyl
Ethylen-1,2-bis(2-ethylindenyl)hafniumdimethyl
Ethylen-1,2-bis(2-methyl-4,5-benzoindenyl)hafniumdimethyl
Ethylen-1,2-bis(2-ethyl-4,5-benzoindenyl)titandimethyl
Ethylen-1,2-bis(4,5-dihydro-8-methyl-7H-cyclopent[e]acenaphthylen-7-yliden)titandimethyl
Ethylen-1-(2-methyl-4,5-benzoindenyl)-2-(2-methyl-4-phenylindenyl)titandimethyl
Ethylen-1-(2-ethyl-4,5-benzoindenyl)-2-(2-methyl-4-phenylindenyl)titandimethyl
Ethylen-1-(2-methyl-4,5-benzoindenyl)-2-(2-ethyl-4-phenylindenyl)scandiummethyl
Ethylen-1-(2-ethyl-4,5-benzoindenyl)-2-(2-ethyl-4-naphthylindenyl)hafniumdimethyl
Ethylen-1-(2-methylindenyl)-2-(4-phenylindenyl)titandimethyl
Ethylen-1,2-bis(2-methyl-4-phenylindenyl)hafniumdimethyl
Ethylen-1,2-bis(2-ethyl-4-phenylindenyl)hafniumdimethyl
Ethylen-1,2-bis(2-methyl-4,6-diisopropylindenyl)hafniumdimethyl
Ethylen-1,2-bis(2-ethyl-4,6-diisopropylindenyl)titandimethyl
Ethylen-1,2-bis(2-methyl-4-naphthylindenyl)titandimethyl
Ethylen-1,2-bis(2-ethyl-4-naphthylindenyl)hafniumdimethyl
Propylen-2,2-bis(indenyl)hafniumdimethyl
Propylen-2-cyclopentadienyl-2-(1 -indenyl)titandimethyl
Propylen-2-cyclopentadienyl-2-(4-phenyl-1-indenyl)titandimethyl
Propylen-2-cyclopentadienyl-2-(9-fluorenyl)hafniumdimethyl
Propylen-2-cyclopentadienyl-2-(2,7-dimethoxy-9-fluorenyl)hafniumdimethyl
Propylen-2-cyclopentadienyl-2-(2,7-di-tert-butyl-9-fluorenyl)hafniumdimethyl
Propylen-2-cyclopentadienyl-2-(2,7-dibromo-9-fluorenyl)titandimethyl
Propylen-2-cyclopentadienyl-2-(2,7-diphenyl-9-fluorenyl)hafniumdimethyl
Propylen-2-cyclopentadienyl-2-(2,7-dimethyl-9-fluorenyl)titandimethyl
Propylen-2-(3-methylcyclopentadienyl)-2-(2,7-dibutyl-9-fluorenyl)hafniumdimethyl
Propylen-2-(3-tert-butylcyclopentadienyl)-2-(2,7-dibutyl-9-fluorenyl)titandimethyl
Propylen-2-(3-trimethylsilylcyclopentadienyl)-2-(3,6-di-tert-butyl-9-fluorenyl)titandimethyl
Propylen-2-cyclopentadienyl-2-[2,7-bis(3-buten-1-yl)-9-fluorenyl]hafniumdimethyl
Propylen-2-cyclopentadienyl-2-(3-tert-butyl-9-fluorenyl)titandimethyl
Propylen-2,2-bis(tetrahydroindenyl)hafniumdimethyl
Propylen-2,2-bis(2-methylindenyl)hafniumdimethyl
Propylen-2,2-bis(2-ethylindenyl)titandimethyl
Propylen-2,2-bis(2-methyl-4,5-benzoindenyl)titandimethyl
Propylen-2,2-bis(2-ethyl-4,5-benzoindenyl)hafniumdimethyl
Propylen-2,2-bis(4,5-dihydro-8-methyl-7H-cyclopent[e]acenaphthylen-7-yliden)hafniumdimethyl
Propylen-2-(2-methyl-4,5-benzoindenyl)-2-(2-methyl-4-phenylindenyl)hafniumdimethyl
Propylen-2-(2-ethyl-4,5-benzoindenyl)-2-(2-methyl-4-phenylindenyl)titandimethyl
Propylen-2-(2-methyl-4,5-benzoindenyl)-2-(2-ethyl-4-phenylindenyl)hafniumdimethyl
Propylen-2-(2-ethyl-4,5-benzoindenyl)-2-(2-ethyl-4-naphthylindenyl)titandimethyl
Propylen-2-(2-methylindenyl)-2-(4-phenylindenyl)hafniumdimethyl
Propylen-2,2-bis(2-methyl-4-phenylindenyl)titandimethyl
Propylen-2,2-bis(2-ethyl-4-phenylindenyl)hafniumdimethyl
Propylen-2,2-bis(2-methyl-4,6-diisopropylindenyl)titandimethyl
Propylen-2,2-bis(2-ethyl-4,6-diisopropylindenyl)hafniumdimethyl
Propylen-2,2-bis(2-methyl-4-naphthylindenyl)titandimethyl
Propylen-2,2-bis(2-ethyl-4-naphthylindenyl)titandimethyl
1,6-Bis[methylsilylbis(2-methyl-4-phenylindenyl)hafniumdimethyl]hexan
1,6-Bis[methylsilylbis(2-methyl-4,5-benzoindenyl)titandimethyl]hexan
1,6-Bis[methylsilylbis(2-ethyl-4-phenylindenyl)hafniumdimethyl]hexan
1,6-Bis[methylsilylbis(2-methyl-4-naphthylindenyl)titandimethyllhexan
1,6-Bis[methylsilylbis(2-methyl-4,6-diisopropylindenyl)hafniumdimethyl]hexan
1,6-Bis[methylsilyl(2-methyl-4-phenylindenyl)(4,5-benzoindenyl)titandimethyl]hexan
1-[Methylsilylbis(tetrahydroindenyl)hafniumdimethyl]-6-[ethylstannyl(cyclopentadienyl)-(fluorenyl)titandimethyl]hexan
1,6-Disila-1,1,6,6-tetramethyl-1,6-bis[methylsilylbis(2-methyl-4-phenylindenyl)hafnium-dimethyl]hexan
1,4-Disila-1,4-bis[methylsilylbis(2-methyl-4-phenylindenyl)hafniumdimethyl]cyclohexan
[1,4-Bis(1-indenyl)-1,1,4,4-tetramethyl-1,4-disilabutan]bis(pentamethylcyclopentadienylhafniumdimethyl)
[1,4-Bis(9-fluorenyl)-1,1,4,4-tetramethyl-1,4-disilabutan]bis(cyclopentadienylhafniumdimethyl)
[1,4-Bis(1-indenyl)-1,1,4,4-tetramethyl-1,4-disilabutan]bis(cyclopentadienyltitandimethyl)
[1-(1-indenyl)-6-(2-phenyl-1-indenyl)-1,1,6,6-tetraethyl-1,6-disila-4-oxahexan]bis(tert-butylcyclopentadienyltitandimethyl)
[1,10-Bis(2,3-dimethyl-1 -indenyl)-1,1,10,10-tetramethyl-1,10-digermadecan]bis(2-methyl-4-phenylindenylhafniumdimethyl)
(1-Methyl-3-tert-butylcyclopentadienyl)(1-phenyl-4-methoxy-7-chlorofluorenyl)titandimethyl
(4,7-Dichloroindenyl)(3,6-dimesitylfluorenyl)titandimethyl
Bis(2,7-di-tert-butyl-9-cyclohexylfluorenyl)hafniumdimethyl
(2,7-Dimesitylfluorenyl)[2,7-bis(1-naphthyl)fluorenyl]hafniumdimethyl Dimethylsilylbis(fluorenyl)titandimethyl
Dibutylstannylbis(2-methylfluorenyl)hafniumdimethyl
1,1,2,2-Tetraethyldisilandiyl(2-methylindenyl)(4-phenylfluorenyl)titandimethyl
Propylen-1-(2-indenyl)-2-(9-fluorenyl)hafniumdimethyl
1,1 -Dimethyl-1 -silaethylenbis(fluorenyl)titandimethyl
[4-(Cyclopentadienyl)-4,7,7-trimethyl(tetrahydroindenyl)]titandimethyl
[4-(Cyclopentadienyl)-4,7-dimethyl-7-phenyl(5,6-dimethyltetrahydroindenyl)]hafniumdimethyl
[4-(Cyclopentadienyl)-4,7-dimethyl-7-(1-naphthyl)(7-phenyltetrahydroindenyl)]titandimethyl
[4-(Cyclopentadienyl)-4,7-dimethyl-7-butyl(6,6-diethyltetrahydroindenyl)]hafniumdimethyl
[4-(3-tert-Butylcyclopentadienyl)-4,7,7-trimethyl(tetrahydroindenyl)]hafniumdimethyl
[4-(1-Indenyl)-4,7,7-trimethyl(tetrahydroindenyl)]titandimethyl
Bis(cyclopentadienyl)zirkoniumdichlorid
Bis(indenyl)zirkoniumdichlorid
Bis(fluorenyl)zirkoniumdichlorid
(Indenyl)(fluorenyl)zirkoniumdichlorid
Bis(cyclopentadienyl)titandichlorid
Dimethylsilandiylbis(indenyl)zirkoniumdichlorid
Dimethylsilandiylbis(tetrahydroindenyl)zirkoniumdichlorid
Dimethylsilandiylbis(cyclopentadienyl)(indenyl)zirkoniumdichlorid
Dimethylsilandiylbis(2-methylindenyl)zirkoniumdichlorid
Dimethylsilandiylbis(2-ethylindenyl)zirkoniumdichlorid
Dimethylsilandiylbis(2-methyl-4,5-benzoindenyl)zirkoniumdichlorid
Dimethylsilandiylbis(2-ethyl-4,5-benzoindenyl)zirkoniumdichlorid
Dimethylsilandiylbis(2-methyl-4-phenylindenyl)zirkoniumdichlorid
Dimethylsilandiylbis(2-ethyl-4-phenylindenyl)zirkoniumdichlorid
Dimethylsilandiylbis(2-methyl-4,6-diisopropylindenyl)zirkoniumdichlorid
Ethylen-1,2-bis(indenyl)zirkoniumdichlorid
Ethylen-1,2-bis(tetrahydroindenyl)zirkoniumdichlorid
Ethylen-1,2-bis(2-methylindenyl)zirkoniumdichlorid
Ethylen-1,2-bis(2-ethylindenyl)zirkoniumdichlorid
Ethylen-1,2-bis(2-methyl-4,5-benzoindenyl)zirkoniumdichlorid
Ethylen-1,2-bis(2-methyl-4-phenylindenyl)zirkoniumdichlorid
Ethylen-1,2-bis(2-ethyl-4-phenylindenyl)zirkoniumdichlorid
Ethylen-1,2-bis(2-methyl-4,6-diisopropylindenyl)zirkoniumdichlorid
Propylen-2,2-bis(indenyl)zirkoniumdichlorid
Propylen-2,2-(cyclopentadienyl)(indenyl)zirkoniumdichlorid
Propylen-2,2-(cyclopentadoenyl)(fluorenyl)zirkoniumdichlorid
Bis(cyclopentadienyl)(η⁴-butadien)zirkonium
Bis(methylcyclopentadienyl)(η⁴-butadien)zirkonium
Bis(n-butyl-cyclopentadienyl)(η⁴-butadien)zirkonium
Bisindenyl(η⁴-butadien)zirkonium
(tert.butylamido)dimethyl(tetramethyl- 5-cyclopentadienyl)silan-(η⁴-butadien)zirkonium
Bis(2-methylbenzoindenyl)(η⁴-butadien)zirkonium
Dimethylsilandiylbis(2-methyl-indenyl)(η⁴-butadien)zirkonium
Dimethylsilandiylbisindenyl(η⁴-butadien)zirkonium
Dimethylsilandiylbis(2-methyl-4,5-benzoindenyl)(η⁴-butadien)zirkonium
Dimethylsilandiyl(2-methyl-4,5-benzoindenyl)(2-methyl-indenyl)(η⁴-butadien)zirkonium
Dimethylsilandiyl(2-methyl-4,5-benzoindenyl)(2-methyl-4-phenylindenyl)(η⁴-butadien)zirkonium
Dimethylsilandiyl(2-methylindenyl)(4-phenylindenyl)(η⁴-butadien)zirkonium
Dimethylsilandiylbis(2-methyl-4-phenyl-indenyl)(η⁴-butadien)zirkonium
Dimethylsilandiylbis(2-methyl-4,6-diisopropyl-indenyl)(η⁴-butadien)zirkonium
Dimethylsilandiylbis(2-methyl-4,5-diisopropyl-indenyl)(η⁴-butadien)zirkonium
Dimethylsilandiylbis(2-ethyl-4-naphthyl-indenyl)(η⁴-butadien)zirkonium
Dimethylsilandiyl(3-t-butylcyclopentadienyl)(fluorenyl)(η⁴-butadien)zirkonium
Dimethylsilandiylbis(2-ethyl-4-phenylindenyl)(η⁴-butadien)zirkonium
Dimethylsilandiylbis(2,3,4-trimethylindenyl)(η⁴-butadien)zirkonium
Dimethylsilandiylbis(2,4-dimethylindenyl)(η⁴-butadien)zirkonium
Dimethylsilandiylbis(2,4,7-trimethylindenyl)(η⁴-butadien)zirkonium
Dimethylsilandiylbis(4,5-dihydro-8-methyl-7H-cyclopent[e]acenaphthylen-7-yliden)(η⁴-butadien)zirkonium
Isopropyliden(cyclopentadienyl)(fluorenyl)(η⁴-butadien)zirkonium
Isopropyliden-(3-methylcyclopentadienyl)(fluorenyl)(η⁴-butadien)zirkonium
Isopropyliden(cyclopentadienyl)(indenyl)(η⁴-butadien)zirkonium
Ethylen-1,2-bis(2-methyl-indenyl)(η⁴-butadien)zirkonium
Ethylen-1,2-bisindenyl(η⁴-butadien)zirkonium
Ethylen-1,2-bis(2-methyl-4,5-benzoindenyl)(η⁴-butadien)zirkonium
Ethylen-1,2-bis(2-methyl-4-phenyl-indenyl)(η⁴-butadien)zirkonium
Ethylen-1,2-bis(2-methyl-4,6-diisopropyl-indenyl)(η⁴-butadien)zirkonium
Ethylen-1,2-bis(2-methyl-4,5-diisopropyl-indenyl)(η⁴-butadien)zirkonium
Ethylen-1,2-bis(2-ethyl-4-naphthyl-indenyl)(η⁴-butadien)zirkonium
Ethylen-1,2-(3-t-butylcyclopentadienyl)(fluorenyl)(η⁴-butadien)zirkonium
Ethylen-1,2-bis(2-ethyl-4-phenylindenyl)(η⁴-butadien)zirkonium
Ethylen-1,2-bis(2,3,4-trimethylindenyl)(η⁴-butadien)zirkonium
Ethylen-1,2-bis(2,4-dimethylindenyl)(η⁴-butadien)zirkonium
Ethylen-1,2-bis(2,4,7-trimethylindenyl)(η⁴-butadien)zirkonium
Ethylen-1,2-bis(4,5-dihydro-8-methyl-7H-cyclopent[e]acenaphthylen-7-yliden)(η⁴-butadien)zirkonium (2-methyl-4,5-benzoindenyl)(2-methyl-indenyl)(η⁴-butadien)zirkonium
Propylen-2,2-bis(2-methyl-4-phenyl-indenyl)(η⁴-butadien)zirkonium
Propylen-2,2-bis(2-methyl-4,6-diisopropyl-indenyl)(η⁴-butadien)zirkonium
Propylen-2,2-bis(2-ethyl-4-naphthyl-indenyl)(η⁴-butadien)zirkonium
Propylen-2,2-(3-t-butylcyclopentadienyl)(fluorenyl)(η⁴-butadien)zirkonium
Propylen-2,2-bis(2-ethyl-4-phenylindenyl)(η⁴-butadien)zirkonium
Propylen-2,2-bis(2,4-dimethylindenyl)(η⁴-butadien)zirkonium
Propylen-2,2-bis(2-methyl-indenyl)(η⁴-butadien)zirkonium
Propylen-2,2-bisindenyl(η⁴-butadien)zirkonium
Propylen-2,2-bis(2-methyl-4,5-benzoindenyl)(η⁴-butadien)zirkonium
Diphenylsilandiylbis(2-methyl-indenyl)(η⁴-butadien)zirkonium
Diphenylsilandiylbisindenyl(η⁴-butadien)zirkonium
Diphenylsilandiylbis(2-methyl-4,5-benzoindenyl)(η⁴-butadien)zirkonium
Diphenylsilandiyl(2-methyl-4,5-benzoindenyl)(2-methyl-indenyl)(η⁴-butadien)zirkonium
Diphenylsilandiyl(2-methyl-4,5-benzoindenyl)(2-methyl-4-phenylindenyl)(η⁴-butadien)zirkonium
Diphenylsilandiylbis(2-methyl-4-phenyl-indenyl)(η⁴-butadien)zirkonium
Diphenylsilandiylbis(2-methyl-4,6-diisopropyl-indenyl)(η⁴-butadien)zirkonium
Diphenylsilandiylbis(2-methyl-4,5-diisopropyl-indenyl)(η⁴-butadien)zirkonium
Diphenylsilandiylbis(2-ethyl-4-naphthyl-indenyl)(η⁴-butadien)zirkonium
Diphenylsilandiyl(3-t-butylcyclopentadienyl)(fluorenyl)(η⁴-butadien)zirkonium
Diphenylsilandiylbis(2-ethyl-4-phenylindenyl)(η⁴-butadien)zirkonium
Diphenylsilandiylbis(2,4-dimethylindenyl)(η⁴-butadien)zirkonium
Diphenylsilandiylbis(2,4,7-trimethylindenyl)(η⁴-butadien)zirkonium
Diphenylsilandiyl-(3-(trimethylsilyl)cyclopentadienyl)(fluorenyl)(η⁴-butadien)zirkonium
Diphenylsilandiylbis(4,5-dihydro-8-methyl-7H-cyclopent[e]acenaphthylen-7-yliden)(η⁴-butadien)zirkonium
Phenylmethylsilandiylbis(2-methyl-indenyl)(η⁴-butadien)zirkonium
Phenylmethylsilandiylbisindenyl(η⁴-butadien)zirkonium
Phenylmethylsilandiylbis(2-methyl-4,5-benzoindenyl)(η⁴-butadien)zirkonium
Phenylmethylsilandiyl(2-methyl-4,5-benzoindenyl)(2-methyl-indenyl)(η⁴-butadien)zirkonium
Phenylmethylsilandiyl(2-methyl-4,5-benzoindenyl)(2-methyl-4-phenylindenyl)(η⁴-butadien)zirkonium
Phenylmethylsilandiyl(2-methylindenyl)(4-phenylindenyl)(η⁴-butadien)zirkonium
Phenylmethylsilandiylbis(2-methyl-4-phenyl-indenyl)(η⁴-butadien)zirkonium
Phenylmethylsilandiylbis(2-ethyl-4-phenyl-indenyl)(η⁴-butadien)zirkonium
Phenylmethylsilandiylbis(2-methyl-4,6-diisopropyl-indenyl)(η⁴-butadien)zirkonium
Phenylmethylsilandiylbis(2-methyl-4-naphthyl-indenyl)(η⁴-butadien)zirkonium
1,6-{Bis[methylsilyl-bis(2-methyl-4-phenyl-indenyl)(η⁴-butadien)zirkonium]}hexan
1,6-{Bis[methylsilyl-bis(2-ethyl-4-phenyl-indenyl)(η⁴-butadien)zirkonium]}hexan
1,6-{Bis[methylsilyl-bis(2-methyl-4-naphthyl-indenyl)(η⁴-butadien)zirkonium]}hexan
1,6-{Bis[methylsilyl-bis(2-methyl-4,5-benzoindenyl)(η⁴-butadien)-zirkonium]}hexan
1,6-{Bis[methylsilyl-(2-methyl-4-phenyl-indenyl)(2-methyl-indenyl)(η⁴-butadien)zirkonium]}hexan
1,2-{Bis[methylsilyl-bis(2-methyl-4-phenyl-indenyl)(η⁴-butadien)zirkonium]}ethan
1,2-{Bis[methylsilyl-bis(2-ethyl-4-phenyl-indenyl)(η⁴-butadien)zirkonium]}ethan
1,2-{Bis[methylsilyl-bis(2-methyl-4-naphthyl-indenyl)(η⁴-butadien)-zirkonium]}ethan
1,2-{Bis[methylsilyl-bis(2-methyl-4,5-benzoindenyl)(η⁴-butadien)zirkonium]}ethan
1,2-{Bis[methylsilyl-(2-methyl-4-phenyl-indenyl)(2-methyl-indenyl)(η⁴-butadien)zirkonium]}ethan. Methylphenylmethylen-(fluorenyl)(cyclopentadienyl)(η⁴-butadien)zirkonium
Diphenylmethylen-(fluorenyl)(cyclopentadienyl)(η⁴-butadien)zirkonium
4-Cyclopentadienyl-4,7,7-trimethyltetrahydroindenylzirkoniumdimethyl
Dimethylsilandiyl(tert.-butylamido)(tetramethylcyclopentadienyl)zirkoniumdimethyl
Dimethylsilandiyl(tert.-butylamido)(cyclopentadienyl)zirkoniumdimethyl
Dimethylsilandiyl(tert.-butylamido)(indenyl)zirkoniumdimethyl
Dimethylsilandiyl(tert.-butylamido)(indenyl)titandimethyl
Dimethylsilandiyl(cyclohexylamido)(methylcyclopentadienyl)zirkoniumdimethyl
Dimethylsilandiyl(cyclohexylamido)(methylcyclopentadienyl)titandimethyl

Herstellungsverfahren für Metallocene der Formel I sind z.B. in Journal of Organometallic Chem. 1985, 288, 63 - 67 und der dort zitierten Dokumente beschrieben.

Die Cokatalysatorkomponente ist mindestens eine Verbindung der allgemeinen Formel (II), die durch Reaktion mit einer Übergangsmetallverbindung wie einem Metallocen diese in eine kationische Verbindung überführt. 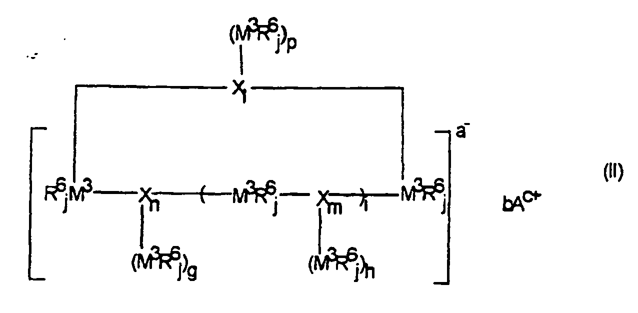 worin
- R⁶: unabhängig voneinander gleich oder verschieden ein Halogenatom oder eine C₁-C₄₀-kohlenstoffhaltige Gruppe sind wie eine C₁-C₄₀-Alkyl, C₁-C₄₀-Halogenalkyl, C₆-C₄₀-Aryl, C₆-C₄₀-Halogenaryl-, C₇-C₄₀-Arylalkyl oder C₇-C₄₀-Halogen-Arylalkyl-Gruppe,
- X: unabhängig voneinander gleich oder verschieden eine C₁-C₄₀-Alkylen-, C₁-C₄₀-Halogenalkylen, C₆-C₄₀-Arylen, C₆-C₄₀-Halogenarylen, C₇-C₄₀-Arylalkylen- oder C₇-C₄₀-Halogenarylalkylen, C₂-C₄₀-Alkinylen-, C₂-C₄₀-Halogenalkinylen, C₂-C₄₀-Alkenylen- oder C₂-C₄₀-Halogen-Alkenylen-Gruppe oder eine dreibindige kohlenstoffhaltige Gruppe wie eine C₁-C₄₀-Alkantriyl, C₁-C₄₀-Halogenalkantriyl-, C₆-C₄₀-Arentriyl-, C₆-C₄₀-Halogenarentriyl-, C₇-C₄₀-Arenalkantriyl-, C₇-C₄₀-Halogenarenalkantriyl-, C₂-C₄₀-Alkintriyl-, C₂-C₄₀-Halogenalkintriyl-, C₂-C₄₀-Alkentriyl- oder C₂-C₄₀-Halögenalkentriyl-Gruppe,
- M³: Bor ist,
- a: b, c gleich 0, 1 oder 2 sind und a = b c ist,
- n: gleich 0 oder 1 ist,
- m: gleich 0 oder 1 ist,
- I: gleich 0 oder 1 ist,
- g: h, p gleich 0 oder 1 sind,
- i: gleich 0 oder 1 ist,
- j: gleich 2 oder 3 ist,
- A: ein Kation der Gruppe la, IIa, IIIa des Periodensystems der Elemente, ein Carbenium-, Oxonium- oder Sulfoniumkation oder eine quartäre Ammonium-Verbindung ist,
wenn a=0 ist, so handelt es sich um eine neutrale chemische Verbindung; wenn a >= 1 ist, so handelt es sich um eine negativ geladene Verbindung mit b Kationen A^{c+} als Gegenionen, und wobei übergangsmetallverbindung und Cokatalysator (II) am Träger nicht kovalent gebunden sind und kein Aluminoxan als Cokatalysator enthalten ist und wobei das Trägermaterial vor Inkontaktbringen mit der Übergangsverbindung und dem Cokatalysator mit einer aluminium-, bor- magnesium- oder siliziumorganischen Verbindung umgesetzt wird.

Weist die chemische Verbindung der Formel (II) mehrere Gruppen M³R⁶ⱼ auf, so können diese gleich oder voneinander verschieden sein. Die Zahl j der Reste R in einer Gruppe M³Rⱼ hängt ab von der Bindigkeit und der Wertigkeit von M³.

X kann ein lineares, cyclisches oder verzweigtes Kohlenstoffgerüst aufweisen.

R⁶ ist bevorzugt ein C₁-C₄₀-Kohlenwasserstoffrest, der mit Halogenen wie Fluor, Chlor, Brom oder lod halogeniert bevorzugt perhalogeniert sein kann, insbesondere eine halogenierte, insbesondere perhalogenierte C₁-C₃₀- Alkylgruppe wie Trifluormethyl, Pentachlorethyl, Heptafluorisopropyl oder Monofluorisobutyl oder eine halogenierte, insbesondere perhalogenierte C₆-C₃₀-Arylgruppe wie Pentafluorphenyl, Heptachlomaphthyl, Heptafluornaphthyl, Heptafluortolyl, 3,5-bis(trifluor-methyl)phenyl, 2,4,6-tris(trifluormethyl)phenyl oder 2,2'(octafluor)biphenyl.
X ist bevorzugt eine C₆-C₃₀-Arylengruppe, eine C₂-C₃₀-Alkenylengruppe oder eine C₂-C₃₀-Alkinylengruppe, die halogeniert, insbesondere perhalogeniert sein kann.
Als A sind Carbenium-lonen (R₃C⁺) oder quartäre Ammonium-Ionen mit einer aciden H-Funktion (R₃NH⁺) bevorzugt. Besonders bevorzugt sind quartäre Ammoniumsalze mit aciden H-Funktionen.

Für den Fall, daß a ≥ 1, ist es bevorzugt, daß die Anzahl der Boratome ≤ 4, besonders bevorzugt 2 ist.

Beispiele für Verbindungen der Formel (II) sind: 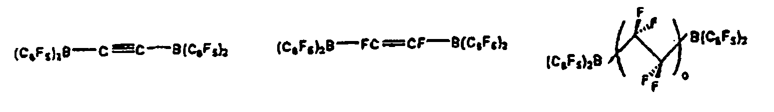 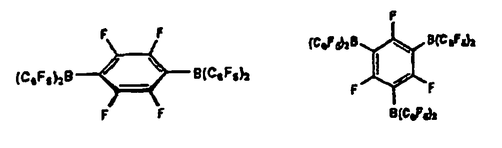 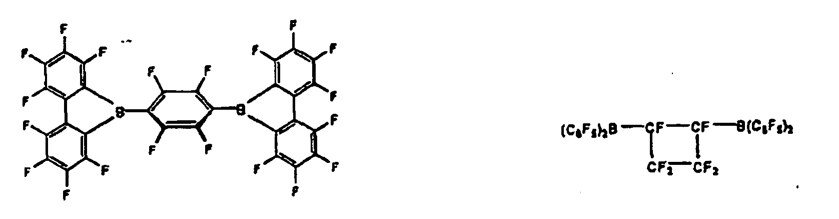 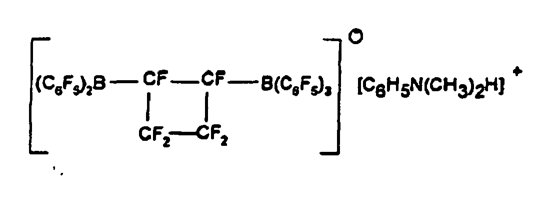 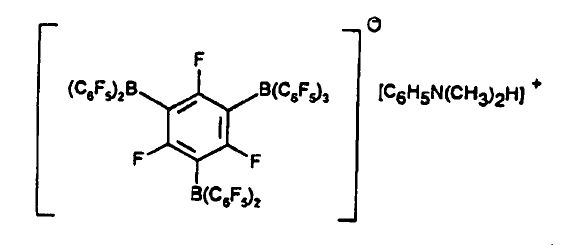 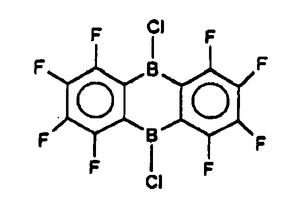 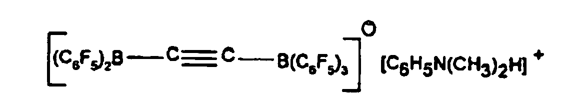 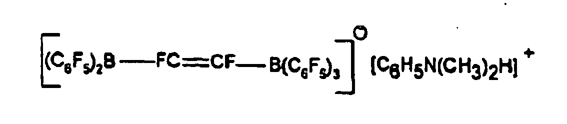 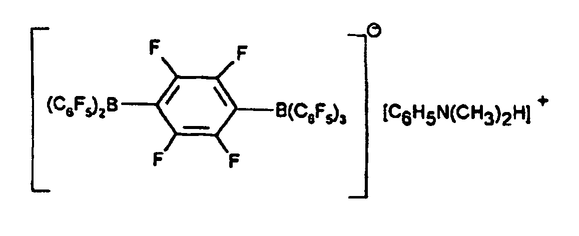 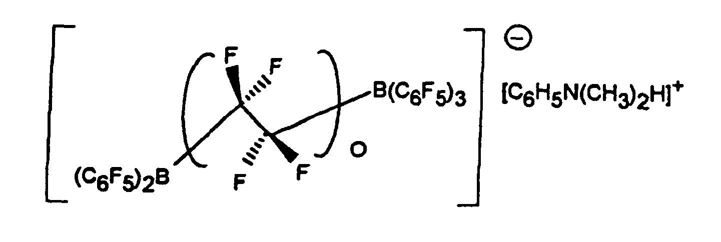 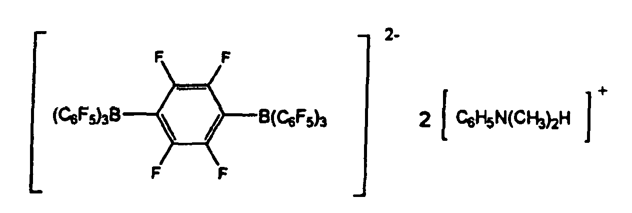 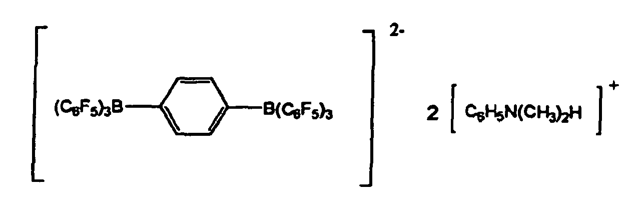 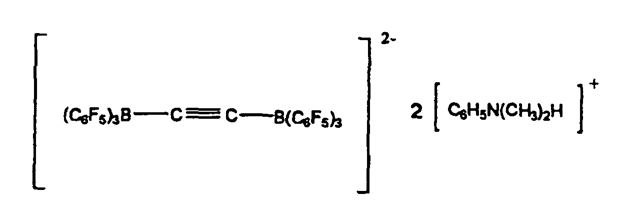 Anstelle des N,N-Dimethylanilinium-Kations [C₆H₅N(CH₃)₂H]⁺ kann alternativ CPh⁺₃ als Kation eingesetzt werden.

Die Herstellung einer Verbindung der Formel II kann z.B. nach folgendem Reaktionsschema ablaufen:

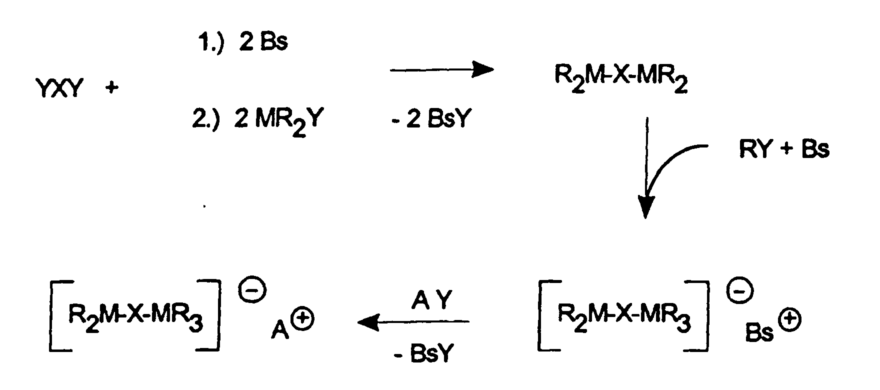

Hierbei ist
- X: eine C₁-C₄₀-kohlenstoffhaltige Gruppe sind wie eine C₁-C₄₀-Alkylen-, C₁-C₄₀-Halogen-Alkylen-, C₆-C₄₀-Arylen-, C₆-C₄₀-Halogen-Arylen-, C₇-C₄₀-Arylalkylen- oder C₇-C₄₀-Halogen-Arylalkylen-, C₂-C₄₀-Alkinylen-, C₂-C₄₀-Halogen-Alkinylen-, C₂-C₄₀-Alkenylen- oder C₂-C₄₀-Halogen-Alkenylen-Gruppe,
- Y: unabhängig voneinander gleich oder verschieden eine Abgangsgruppe, bevorzugt ein Wasserstoff- oder Halogen-Atom,
- R: unabhängig voneinander gleich oder verschieden ein Halogenatom oder eine C₁-C₄₀-kohlenstoffhaltige Gruppe wie eine C₁-C₄₀-Alkyl-, C₁-C₄₀-Halogen-Alkyl-, C₆-C₄₀-Aryl-, C₆-C₄₀-Halogen-Aryl-, C₇-C₄₀-Arylalkyl- oder C₇-C₄₀-Halogen-Arylalkyl-Gruppe,
- Bs: eine Base, bevorzugt eine Organolithium-Verbindung oder eine Grignard-Verbindung,
- M: gleich oder verschieden sind und ein Element der Gruppen IIa, IIIa, IVa oder Va des Periodensystems der Elemente bedeuten und
- A: ein Kation der Gruppe la, IIa, IIIa, des Periodensystems der Elemente, ein Carbenium-, Oxonium- oder Sulfonium-Kation oder eine quartäre Ammonium-Verbindung ist.

Die Trägerkomponente des erfindungsgemäßen Katalysatorsystems ist bevorzugt ein poröser anorganischer oder organischer Feststoff. Der erfindungsgemäße Träger ist bevorzugt inertisiert oder chemisch modifiziert, so daß die Metallocen- und Cokatalysatorkomponente nicht kovalent an den Träger gebunden werden. Bevorzugt enthält die Trägerkomponente mindestens ein anorganisches Oxid, wie Siliziumoxid, Aluminiumoxid, Zeolithe, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K₂O, Li₂O, insbesondere Siliziumoxid und/oder Aluminiumoxid. Der Träger kann auch mindestens ein Polymer z.B. ein Homo- oder Copolymer, ein vernetztes Polymer oder Polymerblends enthalten. Beispiele für Polymere sind Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal, Polyvinylalkohol.

Der Träger kann eine spezifische Oberfläche im Bereich von 10 bis 1000 m²/g, bevorzugt von 150 bis 500 m²/g, besonders bevorzugt von 200 bis 400 m²/g aufweisen. Die mittlere Partikelgröße des Trägers kann von 1 bis 500 µm, bevorzugt von 5 bis 350 µm, besonders bevorzugt von 10 bis 200 µm betragen.

Bevorzugt ist der Träger porös mit einem Porenvolumen von 0,5 bis 4,0 ml/g, bevorzugt von 1,0 bis 3,5 ml/g, ganz besonders bevorzugt von 1,2 bis 3 ml/g. Die poröse Struktur des Trägers bewirkt einen Anteil an Hohlräumen (Porenvolumen) im Trägerpartikel, des Trägermaterial oder des Träger-Formkörper. Die Form der Poren ist unregelmäßig, häufig sphärisch ausgebildet. Die Poren können durch kleine Porenöffnungen miteinander verbunden sein. Der Porendurchmesser beträgt etwa 2 bis 50 nm.

Die Partikelform des porösen Trägers ist abhängig von der Vor- und Nachbehandlung und kann irregulär oder sphärisch sein. Die Träger-Teilchengröße kann z. B. durch kryogene Mahlung, Granulierung und/oder Siebung beliebig eingestellt werden.

Zur Herstellung eines erfindungsgemäßen inertisierten Trägers wird bevorzugt ein anorganisches Oxid, insbesondere bevorzugt Siliziumoxid mit einer metallorganischen, bevorzugt aluminiumorganischen Verbindung vermischt. Die metallorganische Verbindung ist bevorzugt eine aluminiumorganische Verbindung, insbesondere bevorzugt sind lineare, cyclische oder verzweigte, gesättigte oder ungesättigte C₁-C₂₀-kohlenstoffhaltige Gruppen enthaltende aluminiumorganischen Verbindungen, wie Trimethylaluminium, Triethylaluminium, Triisobutylaluminium, Tripropylaluminium, Tri-n-butylaluminium, Tri-sec-butylaluminium, Trihexylaluminium, Tridodecylaluminum, Triphenylaluminum, Tri(cyclohexyl)aluminium, Dimethylaluminiummethoxid, Diethylaluminumethoxid, Diisobutylaluminiummethoxid, Diethylaluminumtrimethylsilyloxid, Lithiumbutyldiisobutylaluminium, Lithiumtri-tert-butoxyaluminium, Lithium-tert-butyldiisobutylaluminium und/oder Diisobutylaluminumtrimethylsilyloxid. Weiter vorgesehen sind magnesium- oder bororganische Verbindungen wie Diethylmagnesium, Diisopropylmagnesium, Dibutylmagnesium, Dioctylmagnesium, Dicyclohexylmagnesium, Dibenzylmagnesium, Ditolylmagnesium, Ethylmagnesiumethoxid, Octylmagnesiumethoxid, Octylmagnesiumoctoxid, Ethylpropylmagnesium, Ethylbutylmagnesium, Amylhexylmagnesium, n-Butyl-sec-butylmagnesium, Butyloctylmagnesium, Triethylboran, Triisobutylboran, Tripropylboran, Tri-n-butylboran, Tri-sec-butylboran, Trihexylboran, Triphenylboran, Tri(cyclohexyl)boran, Dimethylmethoxyboran, Diisobutylmethoxyboran, Diethyltrimethylsilyloxyboran, Lithiumbutyldiisobutylboran, Lithiumtri-tert-butoxyboran, Lithium-tert-butyldiisobutylboran, 2-Biphenylboronsäure, Tris(trimethylsilylmethyl)boran und/oder Phenylboronsäure.

Ganz besonders bevorzugt verwendet werden Trimethylaluminium, Tributylaluminium, Triethylboran und/oder Tributylboran.

Zur Inertisierung des Trägers wird das Trägerausgangsmaterial beispielsweise bei 100°C bis 800°C bei 0.01 bar bis 0.001 bar oder bei 100°C bis 800°C im Inertgasstrom für 5-15 h getrocknet, um physisorbiertes Wasser zu entfernen und dann mit mindestens einer metallorganischen Verbindung umgesetzt. Die Herstellung erfolgt in einem geeigneten Lösungsmittel, wie Pentan, Hexan, Heptan, Toluol oder Dichlormethan, in dem das Trägerausgangsmaterial suspendiert wird. Zu dieser Suspension wird eine Lösung der aluminiumorganischen Verbindung, z.B. eine Aluminiumalkyl-Lösung, langsam zugetropft und durch Verrühren vermischt. Das Trägerausgangsmaterial kann unter Rühren auch trocken mit einer Lösung der aluminiumorganischen Verbindung, vermischt werden.
Die Reaktionstemperatur beträgt bevorzugt -20 bis +150°C, insbesondere 15-40°C. Die Reaktionszeit beträgt 1 bis 120 Minuten, bevorzugt 10-30 Minuten.
Es wird vorzugsweise bei einer Aluminiumkonzentration von größer 0,01 mol/Liter, insbesondere größer 0,5 mol/Liter gearbeitet. Verwendet werden bevorzugt 0,01 bis 0,1 mol Aluminium-Verbindung pro g Trägermaterial.
Die Reaktion wird unter Inertbedingungen durchgeführt. Danach wird vom Lösungsmittel getrennt. Der Rückstand wird zweimal mit einem geeigneten Lösungsmittel wie Pentan, Hexan, Heptan, Toluol oder Dichlormethan, gewaschen und gegebenenfalls im Ölpumpenvakuum bei 20 bis 40°C und 0.01 bis 0.001 bar getrocknet.

Zur Herstellung eines erfindungsgemäßen chemisch modifizierten Trägers wird das Trägerausgangsmaterial bei 100°C bis 800°C bei 0.01 bar bis 0.001 bar oder bei 100°C bis 800°C im Inertgasstrom für 5-15 h getrocknet, um physisorbiertes Wasser zu entfernen und anschließend bevorzugt mit mindestens einer siliziumorganischen Verbindung der Formel (III) umgesetzt.

SiR⁷ _{w} R⁸ ₓ R⁹ _{y} R¹⁰ _{z} (III)

worin,
R⁷, R⁸, R⁹, R¹⁰ unabhängig voneinander gleich oder verschieden eine C₁-C₃₀-kohlenstoffhaltige Gruppe, wie zum Beispiel eine C₁-C₂₀-Alkylgruppe, C₂-C₂₀-Alkenylgruppe, eine C₅-C₃₀-Arylgruppe, eine C₅-C₃₀-Arylalkylgruppe, eine C₅-C₃₀-Arylalkenylgruppe, eine C₅-C₃₀-Alkylarylgruppe, eine C₁-C₂₀-Alkyloxygruppe, eine C₁-C₂₀-Alkenyloxygruppe, C₅-C₃₀-Aryloxygruppe, C₁-C₂₀-Alkoxyalkylgruppe, C₅-C₃₀-Alkylaryloxygruppe, C₅-C₃₀-Arylalkyloxygruppe, eine C₁-C₂₀-Alkylaminogruppe, C₁-C₂₀-Alkylaminoalkylgruppe, eine C₅-C₂₀-Arylaminogruppe, eine C₁-C₂₀-Alkylphosphinogruppe, C₁-C₂₀-Alkylphosphinoalkylgruppe, eine C₅-C₂₀-Arylphosphinogruppe, eine C₅-C₂₀-Arylthiolgruppe, eine C₂-C₂₀-Alkenylthiolgruppe, eine C₁-C₂₀-Alkylthiolgruppe, eine C₁-C₂₀-Alkylthioalkylgruppe, eine C₁-C₂₀-Alkylthioarylgruppe, eine C₅-C₂₀-Arylthioalkenylgruppe, eine C₁-C₂₀-Fluoroalkylgruppe, eine C₅-C₂₀-Fluoroarylgruppe oder eine C₂-C₂₀-Fluoroalkenylgruppe ist und wobei mindestens einer der Reste R⁷, R⁸, R⁹ und R¹⁰ ein Halogenatom, eine Hydroxylgruppe, ein Wasserstoffatom, eine C₁-C₂₀-Alkoxy, eine C₅-C₃₀-Aryloxy oder eine C₁-C₂₀-Alkoxyalkylgruppe bedeuten und w, x, y, z 0, 1, 2, 3 oder 4 und w+x+y+z gleich 4 ist. Die Reste R⁷ bis R¹⁰ können siliziumorganische Einheiten verbrücken.

In Formel (III) gilt bevorzugt R⁷, R⁸, R⁹, R¹⁰ unabhängig voneinander gleich oder verschieden C₁-C₃₀ kohlenstoffhaltige Gruppe wie eine C₁-C₂₀-Alkylgruppe, C₂-C₂₀-Alkenylgruppe, eine C₅-C₃₀-Arylalkylgruppe, eine C₅-C₃₀-Arylalkenylgruppe, eine C₁-C₂₀-Alkyloxygruppe, eine C₁-C₂₀-Alkylaminogruppe, eine C₅-C₂₀-Arylaminogruppe, eine C₁-C₂₀-Alkylphosphinogruppe, eine C₅-C₂₀-Arylphosphinogruppe, eine C₅-C₂₀-Arylthiolgruppe, eine C₁-C₂₀-Alkylthiolgruppe, eine C₁-C₂₀-Alkylthioalkylgruppe, eine C₁-C₂₀-Alkylthioarylgruppe, eine C₅-C₂₀-Arylthioalkenylgruppe, eine C₁-C₂₀-Fluoroalkylgruppe oder eine C₅-C₂₀-Fluoroarylgruppe ist und w, x, y, z 0, 1, 2, 3 oder 4 und w+x+y+z gleich 4 is und mindestens einer der Reste R⁷, R⁸, R⁹, R¹⁰ ein Halogenatom, eine Hydroxylgruppe, ein Wasserstoffatom oder eine C₁-C₂₀-Alkoxygruppe bedeuten.

Beispiele für die erfindungsgemäße Siliziumorganische Verbindung sind
3,3,3-Trifluoropropyltrichlorosilan
1H, 1H, 2H, 2H,-Perfluorodecyltrichlorosilan
1H, 1H, 2H, 2H,-Perfluorooctyltrichlorosilan
2-(Diphenylphophino)ethyltriethoxysilan
(Heptafluoroisopropoxy)propylmethyldichlorosilan
Bis(3-(Triethoxysilyl)propyl)amin
Bis-(3-(trimethoxysilyl)propyl)ethylendiamin
Methylthioldimethylethoxysilan
3-Propyl-thioltrimethoxysilan
3-Propyl-thioltriethoxysilan
2-Ethyl-thioltriethoxysilan
3-Diethylaminopropyltrimethoxysilan
N,N-Dimethyl-3-aminopropyltriethoxysilan
3-(2-lmidazolin-1-yl)propyltriethoxysilan
N, N-Dibutyl-4-aminobutyltrimethoxysilan
N-Hexyl-N-methyl-3-aminopropyltrimethoxysilan
Ethylthiolmethyldiethoxysilan
6-Hexylthioltriethoxysilan
8-Octylthiolmethyldimethoxysilan
Bis(3-propylthiol)-diethoxysilan
Methylthiolmethyldimethoxysilan
Trimethylchlorosilan
Diphenyldichlorosilan
Bis(pentafluorophenyl)dichlorosilan
Trioctylchlorosilan
Ethyltrichlorosilan
Methoxypropyltrimethoxysilan
Triisopropylchlorosilan

Die Modifizierung des Trägerausgangsmaterials erfolgt in der Weise, daß man das Trägerausgangsmaterial in einem geeigneten Lösungsmittel, wie Pentan, Hexan, Heptan, Toluol oder Dichlormethan, suspendiert und zu dieser Suspension eine Lösung der siliziumorganischen Verbindung langsam zutropfen läßt und bei der Siedetemperatur des Lösungsmittels für mehrere Stunden reagieren läßt. Bei Raumtemperatur wird das nun modifizierte Trägermaterial mittels Filtration, Waschen und Trocknung nachbehandelt. Die Trocknung erfolgt bei 20 bis 140°C und 0.01 bis 0.001 bar. Die Reaktionstemperatur beträgt bevorzugt -20 bis +150°C, insbesondere 40 bis 150°C. Die Reaktionszeit beträgt 1 bis 36 Stunden, bevorzugt 1-3 Stunden. Es wird vorzugsweise im äquimolaren Bereich bezüglich des Gehalts an reaktiven Gruppen auf der Oberfläche des Trägermaterials gearbeitet. Die Reaktion wird unter Inertbedingungen durchgeführt.

Zur Herstellung des erfindungsgemäßen Katalysatorsystems wird mindestens eine Trägerkomponente mit mindestens einer Metallocen- und mit mindestens einer Cokatalysatorkomponente vermischt. Dabei ist die Reihenfolge der Mischung der verschiedenen Komponenten unerheblich. Bevorzugt werden zunächst die Metallocen- und die Cokatalysatorkomponente miteinander vermischt und dann der erhaltene kationische Komplex mit der Trägerkomponente vermischt. Die Vermischung erfolgt in einem geeigneten Lösungsmittel wie Pentan, Heptan, Toluol, Dichlormethan oder Dichlorbenzol, in dem die inertisierte oder modifizierte Trägerkomponente suspendiert wird und eine Lösung der Metallocen- und Cokatalysatorkomponente zugetropft wird oder bevorzugt so, daß bis zu 370 % des Porenvolumens der Trägerkomponente als Lösung der Metallocen- und Cokatalysatorkomponente insgesamt zu der trockenen Trägerkomponente zugegeben werden. Die Herstellung des erfindungsgemäßen Katalysatorsystems wird bei -20 bis 150°C, bevorzugt bei 20 bis 50°C und einer Kontaktzeit zwischen 15 Minuten und 25 Stunden, bevorzugt zwischen 15 Minuten und 5 Stunden durchgeführt. Lösungsmittelreste werden in Ölpumpenvakuum entfernt.

Man erhält das erfindungsgemäße Katalysatorsystem mit einem Metallocengehalt, bevorzugt Zirkoniumgehalt von 0.001 bis 2 mmol Zr/g_{Träger}, bevorzugt von 0.01 bis 0.5 mmol Zr/g_{Träger}, besonders bevorzugt 0.01 bis 0.1 mmol Zr/g_{Träger}. Das Cokatalysator/Zirkoniumverhältnis, bevorzugt das Bor/Zirkoniumverhältnis, liegt von 2:1 bis 1: 1.

In dem erfindungsgemäßen Katalysatorsystem sind die Übergangsmetallverbindungen, z.B. ein Metallocen und der Cokatalysator am Träger nicht kovalent gebunden.

Die vorliegende Erfindung betrifft auch ein Verfahren zur Herstellung eines Polyolefins durch Polymerisation eines oder mehrerer Olefine in Gegenwart des erfindungsgemäßen Katalystorsystems, enthaltend mindestens einen inertisierten oder chemisch modifizierten Träger. Unter dem Begriff Polymerisation wird eine Homopolymerisation wie auch eine Copolymerisation verstanden.

Bevorzugt werden Olefine der Formel R^{u}-CH=CH-R^{v} polymerisiert, worin R^{u} und R^{v} gleich oder verschieden sind und ein Wasserstoffatom oder einen kohlenstoffhaltigen Rest mit 1 bis 20 C-Atomen, insbesondere 1 bis 10 C-Atomen, bedeuten, und R^{u} und R^{v} zusammen mit den sie verbindenen Atomen einen oder mehrere Ringe bilden können. Beispiele für solche Olefine sind 1-Olefine mit 2 bis 40, vorzugsweise 2 bis 10 C-Atomen, wie Ethylen, Propen, 1-Buten, 1-Penten, 1-Hexen, 4-Methyl-1-penten oder 1-Octen, Styrol, Diene wie 1,3-Butadien, 1,4-Hexadien, Vinylnorbornen oder Norbornadien und cyclische Olefine wie Norbornen, Tetracyclododecen oder Methylnorbornen. Bevorzugt werden in dem erfindungsgemäßen Verfahren Ethen oder Propen homopolymerisiert, oder Ethen mit einem oder mehreren 1-Olefinen mit 3 bis 20 C-Atomen, wie Propen, und/oder einem oder mehreren Dienen mit 4 bis 20 C-Atomen, wie 1,4-Butadien oder Norbomadien, copolymerisiert. Beispiele solcher Copolymere sind Ethen/Propen-Copolymere und Ethen/Propen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisationszeit beträgt von 10 Minuten bis 10 Stunden, bevorzugt von 30 Minuten bis 120 Minuten.

Die Polymerisation kann in Lösung, in Masse, in Suspension oder in der Gasphase, kontinuierlich oder diskontinuierlich, ein- oder mehrstufig durchgeführt werden.

Bevorzugt enthält das in dem erfindungsgemäßen Verfahren eingesetzte Katalysatorsystem eine Übergangsmetallverbindung der Metallocenkomponente. Es können auch Mischungen zweier oder mehrerer Übergangsmetallverbindungen der Metallocenkomponente eingesetzt werden, z.B. zur Herstellung von Polyolefinen mit breiter oder multimodaler Molmassenverteilung und sogenannten Reaktorblends.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Das geträgerte Katalysatorsystem kann als Pulver oder noch mit Lösemittel behaftet in einem inerten Suspensionsmittel wieder resuspendiert werden. Die Suspension kann in das Polymerisationssystem eingeführt werden.

Vor der Zugabe des erfindungsgemäßen geträgerten Katalysatorsystems in das Polymerisationsystem ist eine Reinigung des Olefins mit einer Aluminiumalkylverbindung, wie beispielsweise Trimethylaluminium, Triethylaluminium, Triisobutylaluminium, Trioctylaluminium, Isoprenylaluminium oder Aluminoxane zur Inertisierung des Polymerisationssystems (beispielsweise zur Abtrennung vorhandener Katalysatorgifte im Olefin) vorteilhaft. Diese Reinigung kann sowohl im Polymerisationssystem selbst erfolgen, oder das Olefin wird vor der Zugabe in das Polymerisationsystem mit der Al-Verbindung in Kontakt gebracht und anschließend wieder getrennt. Wird diese Reinigung im Polymerisationssystem selbst durchgeführt, wird die Aluminiumalkylverbindung in einer Konzentration von 0,01 bis 100 mmol Al pro kg Reaktorinhalt dem Polymerisationssystem zugesetzt. Bevorzugt werden Triisobutylaluminium und Triethylaluminium in einer Konzentration von 0,1 bis 10 mmol Al pro kg Reaktorinhalt eingesetzt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird das Katalysatorsystem in einer Konzentration, bezogen auf das Übergangsmetall von bevorzugt 10⁻³ bis 10⁻⁸, besonders bevorzugt 10⁻⁴ bis 10⁻⁷ mol Übergangsmetall pro dm³ Lösemittel bzw. pro dm3 Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern (z.B. Rohre) geeignet.

Mit dem erfindungsgemäßen Katalysatorsystem wird eine Katalysatoraktivität von 170 bis 250 kg PP/g Metallocen xh erreicht.

Die Erfindung wird anhand von Beispielen näher erläutert.

### Beispiele

Allgemeine Angaben: Die Herstellung und Handhabung der organometallischen Verbindungen erfolgte unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert. Als sphärische, poröse Trägermaterialien wurden Silicas eingesetzt wie z.B. MS-Typen der Fa. PQ Corporation, ES- oder EP-Typen der Fa. Crosfield, oder Silica-Typen 948, 952, 955 der Fa. Grace Davisson oder ähnliche.

Die Verbindungen wurden mit ¹H-HMR, ¹³C-NMR und IR-Spektroskopie charakterisiert.

### Beispiel 1: 1,4-Bis(dipentafluorophenylboran)-2,3,5,6-tetrafluorbenzol

1.54 g (5 mmol) Dibromotetrafluorobenzol werden in 40 ml n-Hexan gelöst und auf -78°C gekühlt. Zu dieser Lösung werden 6.4 ml n-BuLi (10 mmol) langsam zugetropft und 1 Std. lang gerührt. Anschließend werden 3.80 g (5 mmol) Bis(pentafluorophenyl)borylchlorid in 40 ml n-Hexan gelöst und ebenfalls zu der obigen Lösung zugetropft. Die erhaltene Suspension wird langsam auf Raumtemperatur erwärmt, wobei sich ein weißer Niederschlag abscheidet. Dieser wird durch Filtration abgetrennt und das erhaltene Filtrat im Vakuum bis zur Trockne eingeengt. Die Ausbeute des so erhaltenen, als gelbes Öl anfallendes, 1,4-Bis(dipentafluor-phenylboryl)-2,3,5,6-tetrafluorobenzol beträgt 81 %.

### Beispiel 2: Bis(dipentafluorophenylboryl)acetylen

1.06 g (5 mmol) Bis(chlorodimethylsilyl)acetylen werden in 40 ml n-Hexan gelöst und auf -78°C gekühlt. Zu dieser Lösung werden langsam 3.80 g (10 mmol) Bis(pentafluorophenyl)-borylchlorid in 40 ml n-Hexan zugetropft. Es wird 1 Std. bei -78°C gerührt und anschließend langsam auf RT erwärmt. Lösemittel und entstandenes Dimethyldichlorosilan werden im Hochvakuum entfernt. Das verbleibende, gelbe Öl wird anschließend fraktioniert destilliert. Dabei fallen 2.2 g (61.7 % Ausbeute) Bis(dipentafluorophenylboryl)acetylen an.

### Beispiel 5: Triphenylcarbenium[(dipentafluorophenylboran)-2,3,5,6-tetrafluorophenyl]-tripentafluorophenylborat

0.62 g Brompentafluorbenzol (2.5 mmol) werden in 40 ml Diethylether gelöst und bei -78°C mit 1.6 ml n-BuLi (2.5 mmol, 1.6 M in Hexan) versetzt. Die Suspension wird 1 Std. bei - 10°C gerührt. Anschließend werden 2.1 g (2.5 mmol) 1,4-Bis(dipentafluorophenylboryl)-2,3,5,6-tetrafluorbenzol in 40 ml n-Hexan zu der obigen Lösung langsam zugetropft. Die erhaltene Suspension wird langsam auf Raumtemperatur erwärmt, wobei sich ein Niederschlag abscheidet. Dieser wird durch Filtration abgetrennt und das erhaltene Filtrat im Vakuum bis zur Trockne eingeengt. Das so erhaltene Lithiumsalz wird in 40 ml n-Pentan aufgenommen und bei Raumtemperatur mit 0.7 g (2.5 mmol) Triphenylmethylchlorid versetzt. Nach 8 Std. Rühren wird der orange Feststoff filtriert. Das Filtrat wird in Methylenchlorid extrahiert, um das entstandenen LiCl abzutrennen. Fällung mit n-Pentan ergibt einen orangen Feststoff (Ausbeute 56%).

### Beispiel 6:

10 g SiO₂ (MS 3030, Fa. PQ, getrocknet bei 600°C im Argonstrom) wurden in 50 ml Toluol suspendiert und tropfenweise unter Rühren langsam mit einer Lösung von 100 mg (0,229 mmol) Dimethylsilandiylbis(2-methylindenyl)zirkoniumdimethyl und 128 mg (0,153 mmol) 1,4-Bis(dipentafluorophenylboran)-2,3,5,6-tetrafluorobenzol in 3 ml Toluol versetzt. Man ließ 1 h bei Raumtemperatur rühren und entfemte dann das Lösungsmittel im Ölpumpenvakuum bis zur Gewichtskonstanz. Zum Einschleusen in das Polymerisationssystem wurden 1 g des geträgerten Katalysators in 30 cm³ Exxsol resuspendiert.

### Polymerisation:

Parallel dazu wurde ein trockener 16-dm³-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm3 Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 1,4 kg Polypropylen-Pulver. Der Reaktor zeigte keine Beläge an Innenwand oder Rührer. Die Katalysatoraktivität betrug 144 kg PP/g Metallocen x h.

### Beispiel 7:

Zu einer Lösung von 100 mg (0,229 mmol) Dimethylsilandiylbis(2-methylindenyl)zirkoniumdimethyl und 143 mg (0,114 mmol) Triphenylcarbenium[(dipentafluorophenylboran)-2,3,5,6-tetrafluorophenyl]triphenylfluorophenylborat in 50 ml Toluol werden portionsweise 10 g SiO₂ (MS 3030, Fa. PQ, getrocknet bei 600°C im Argonstrom) zugegeben. Man ließ 1 h bei Raumtemperatur rühren und entfernte dann das Lösungsmittel im Ölpumpenvakuum bis zur Gewichtskonstanz. Zum Einschleusen in das Polymerisationssystem wurden 1 g des geträgerten Katalysators in 30 cm³ Exxsol resuspendiert.

### Polymerisation:

Parallel dazu wurde ein trockener 16-dm3-Reaktor zunächst mit Stickstoff und anschließend mit Propylen gespült und mit 10 dm³ flüssigem Propylen befüllt.Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakaumtrockenschrank getrocknet. Es resultierten 1,8 kg Polypropylen-Pulver. Der Reaktor zeigte keine Beläge an Innenwand oder Rührer. Die Katalysatoraktivität betrug 186 kg PP/g Metallocen x h.

### Beispiel 8:

### 1,4-Bis(dibromoboryl)-2,3,5,6-tetrafluorobenzol

Zu 10 g (40 mmol) BBr₃ werden portionsweise 4.44 g (20 mmol) festes 1,4-Bis(trimethylsilyl)-2,3,5,6-tetrafluorobenzol gegeben. Die Mischung wird 5 Std. auf 80°C erwärmt. Anschließend wird flüchtiges Me₃SiBr an der Ölpumpe entfernt.

Das resultierende Produkt hat eine ausreichende Reinheit, um direkt weiter umgesetzt zu werden. Die Ausbeute beträgt 76 %.

### Beispiel 9:

### Bis(triphenylcarbenium)-1,4-bis{(tri-[pentafluorophenyl])boryl}2,3,5,6-tetrafluorobenzol

Zu 3.8 ml Brompentafluorobenzol (30 mmol) werden in 50 ml Diethylether bei -78°C 19 ml n-BuLi (30 mmol) gegeben. Es wird 1 Std. bei dieser Temperatur gerührt. Anschließend werden 2.5 g 1,4-Bis(dibromboryl)-2,3,5,6-tetrafluorobenzol (5 mmol) portionsweise zugegeben. Die erhaltene Suspension wird langsam auf Raumtemperatur erwärmt, wobei sich ein Niederschlag abscheidet. Dieser wird durch Filtration abgetrennt und das erhaltene Filtrat im Vakuum bis zur Trockne eingeengt. Das so erhaltene Dilithiumsalz wird in 100 ml Pentan aufgenommen und bei Raumtemperatur mit 2.8 g (10 mmol) Triphenylmethylchlorid versetzt. Nach 8 Std. Rühren wird der orange/rote Feststoff filtriert. Das Filtrat wird in Methylenchlorid extrahiert, um das entstandene LiCl abzutrennen. Fällung mit n-Pentan ergibt einen organge/roten Feststoff (Ausbeute 64 %).

### Beispiel 10:

### Bis(N,N-dimethylanilinium)-1,4-bis-{(tri-[pentafluorophenyl]-boryl}-2,3,5,6-tetrafluorobenzol

1.22 g Brompentafluorobenzol (5 mmol) werden in 40 ml n-Hexan gelöst und bei -78°C mit 3.2 ml (5 mmol) n-BuLi versetzt. Die Suspension wird 1 Std. Bei -78°C gerührt. Anschließend werden 2.1 g 1,4-Bis(dipentafluorophenylboryl)-2,3,5,6-tetrafluorobenzol (2.5 mmol) in 40 ml Hexan zu der obigen Lösung zugetropft. Die erhaltene Suspension wird langsam auf Raumtemperatur erwärmt, wobei sich ein Niederschlag abscheidet. Dieser wird durch Filtration abgetrennt und das erhaltene Filtrat im Vakuum bis zur Trockne eingeengt. Das so erhaltene Dilithiumsalz wird in 40 ml Pentan aufgenommen und bei Raumtemperatur mit 1,6 g Dimethylaniliniumchlorid versetzt. Nach 8 Std. Rühren wird der weiße Feststoff filtriert. Das Filtrat wird in Methylenchlorid extrahiert, um das entstandene LiCl abzutrennen. Die Fällung mit Pentan ergibt einen weißen Feststoff (Ausbeute 67 %).

### Beispiel 11:

### Inertisierung des Trägermaterials

10 g SiO₂ (PQ MS 3030, Fa. PQ Corporation, getrocknet bei 140°C und 10 mbar) wurden tropfenweise unter Rühren langsam mit 40 ml 20%iger Trimethylaluminiumlösung in Varsol versetzt. Es wurde dann soviel Toluol zugesetzt, daß eine leicht rührbare Suspension entstand. Man ließ noch 10 Minuten rühren und filtrierte dann vom Lösungsmittel ab. Der Filterrückstand wurde noch zweimal mit 35 ml Toluol gewaschen. Im Ölpumpenvakuum wurde das so vorbehandelte Trägermaterial bei Raumtemperatur getrocknet. Man erhielt 18 g inertisiertes Trägermaterial.

### Herstellung des geträgerten Katalysatorsystems

1,5 g inertisiertes SiO₂ wurden in 50 ml Toluol suspendiert und tropfenweise unter Rühren langsam mit einer Lösung von 20 mg (0,034 mmol) Dimethylsilandiylbis(2-methyl-4-phenylindenyl)zirkoniumdimethyl und 28 mg (0,034 mmol) 1,4-Bis(dipentafluorophenylboran)-2,3,5,6-tetrafluorobenzol in 6 ml Toluol versetzt. Man ließ 2 h bei Raumtemperatur langsam rühren und entfernte dann das Lösungsmittel im Ölpumpenvakuum bis zur Gewichtskonstanz. Zum Einschleusen in das Polymerisationssystem wurde das geträgerte Katalysatorsystem in 30 cm³ iso-Hexan resuspendiert.

### Polymerisation

Parallel dazu wurde ein trockener 16-dm³-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet. Es resultierten 1,8 kg Polypropylen-Pulver. Der Reaktor zeigte keine Beläge an Innenwand oder Rührer. Die Katalysatoraktivität betrug 120 kg PP/g Metallocen x h. Schmp. = 159°C.

### Beispiel 12:

### Inertisierung des Trägermaterials

2 g SiO₂ (PQ MS 3030, Fa. PQ Corporation, getrocknet bei 140°C und 10 mbar) wurden in Toluol suspendiert und tropfenweise unter Rühren langsam mit 4 ml 20%iger Trimethylaluminiumlösung in Varsol versetzt. Man ließ noch 30 min. rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial bei Raumtemperatur getrocknet. Man erhielt 2,7 g inertisiertes Trägermaterial.

### Herstellung des geträgerten Katalysatorsystems

Zu einer Lösung von 20 mg (0,034 mmol) Dimethylsilandiylbis(2-methyl-4-phenylindenyl)zirkoniumdimethyl und 57 mg (0,034 mmol) Bis[triphenylcarbenium][2,3,5,6-tetrafluorophenyl-1,4-bis(tri(pentafluorophenyl)borat)] in 15 ml Toluol werden portionsweise 2 g inertisiertes SiO₂ zugegeben. Man ließ 12 h bei Raumtemperatur rühren und entfernte dann das Lösungsmittel im Ölpumpenvakuum bis zur Gewichtskonstanz. Zum Einschleusen in das Polymerisationssystem wurden das geträgerte Katalysatorsystem in 30 cm³ iso-Hexan resuspendiert.

### Polymerisation

Parallel dazu wurde ein trockener 16-dm3-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet. Es resultierten 2,7 kg Polypropylen-Pulver. Der Reaktor zeigte keine Beläge an Innenwand oder Rührer. Die Katalysatoraktivität betrug 135 kg PP/g Metallocen x h. Schmp. = 160°C.

### Beispiel 13

### Herstellung des geträgerten Katalysatorsystems

Zu einer Lösung von 100 mg (0,170 mmol) Dimethylsilandiylbis(2-methyl-4-phenylindenyl)zirkoniumdimethyl und 142 mg (0,085 mmol) Bis[triphenylcarbenium][2,3,5,6-tetrafluorophenyl-1,4-bis(tri(pentafluorophenyl)borat] in 50 ml Toluol werden portionsweise 10 g inertisiertes SiO₂ analog Beispiel B zugegeben. Man ließ 4 h bei Raumtemperatur rühren und entfernte dann das Lösungsmittel im Ölpumpenvakuum bis zur Gewichtskonstanz. Zum Einschleusen in das Polymerisationssystem wurden 1 g des geträgerten Katalysators in 30 cm³ iso-Hexan resuspendiert.

### Polymerisation

Parallel dazu wurde ein trockener 16-dm³-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt.

Anschließend wurde die Katalysator-Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet. Es resultierten 1,7 kg Polypropylen-Pulver. Der Reaktor zeigte keine Beläge an Innenwand oder Rührer. Die Katalysatoraktivität betrug 175 kg PP/g Metallocen x h. Schmp. = 159°C

### Beispiel 14 (erläutert nicht die beanspruchte Erfindung)

### Inertisierung des Trägermaterials

10 g SiO₂ (PQ MS 3030F, Fa. PQ Corporation, getrocknet bei 140°C und 10 mbar) wurden in Toluol suspendiert und tropfenweise unter Rühren langsam mit 20 ml 20%iger Trimethylaluminiumlösung in Varsol versetzt. Man ließ noch 30 Minuten rühren und filtrierte dann vom Lösungsmittel ab. Der Filterrückstand wurde noch zweimal mit 10 ml Toluol gewaschen. Im Ölpumpenvakuum wurde das so vorbehandelte Trägermaterial bei Raumtemperatur getrocknet. Man erhielt 13,7 g inertisiertes Trägermaterial.

### Herstellung des geträgerten Katalysatorsystems

Zu einer Lösung von 20 mg (0,034 mmol) Dimethylsilandiylbis(2-methyl-4-phenylindenyl)zirkoniumdimethyl und 54 mg (0,068 mmol) Dimethylaniliniumtetrakis(pentafluorophenyl)borat in 10 ml Toluol werden portionsweise 2 g inertisiertes SiO₂ zugegeben. Man ließ 10 min. bei Raumtemperatur rühren und entfernte dann das Lösungsmittel im Ölpumpenvakuum bis zur Gewichtskonstanz. Zum Einschleusen in das Polymerisationssystem wurden das geträgerte Katalysatorsystem in 30 cm³ iso-Hexan resuspendiert.

### Polymerisation

Parallel dazu wurde ein trockener 16-dm3-Reaktor zunächst mit Stickstoff und anschließend mit Propylen gespült und mit 10 dm³ flüssigem Propylen befüllt. Dann wurden 0,5 cm³ einer 20%igen Triisobutylaluminiumlösung in Varsol mit 30 cm³ Exxsol verdünnt in den Reaktor gegeben und der Ansatz bei 30°C 15 Minuten gerührt. Anschließend wurde die Katalysator-Suspension in den Reaktor gegeben.

Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet. Es resultierten 2,5 kg Polypropylen-Pulver. Der Reaktor zeigte keine Beläge an Innenwand oder Rührer. Die Katalysatoraktivität betrug 125 kg PP/g Metallocen x h. Schmp. = 161°C

### Beispiel 15:

### Trägervorbehandlung

20 g SiO₂ MS 3030 der Fa. PQ Corporation, getrocknet bei 100°C im Vakuum wurden in 200 ml Heptan suspendiert. Bei Raumtemperatur wurden unter Rühren und Argonüberleitung langsam 56 mmol Triisobutylaluminium-Lösung (als 2-molare Lösung in Varsol) innerhalb von 30 Minuten dazu gegeben, wobei ein Temperaturanstieg auf 48°C zu beobachten war. Über Nacht wird nachgerührt. Der Feststoff wird abfiltriert und je 2x mit 30 ml Heptan und dann 1x mit 30 ml Pentan gewaschen. Anschließend trocknet man im Ölpumpenvakuum bis zur Gewichtskonstanz.

### Herstellung des geträgerten Katalysatorssystems:

58,1 mg (0,122 mmol) Me₂Si(2-Me-Ind)2ZrCl₂ wurden in 50 ml Toluol suspendiert, mit 2,5 mmol Triisobutylaluminium-Lösung (als 2-molare Lösung in Varsol) versetzt, 10 Minuten gerührt und danach mit 5 g des obigen Trägermaterials versetzt. Weitere 60 Minuten wurde gerührt. Lösungsmittelreste werden dann im Ölpumpenvakuum entfernt.

### Polymerisation:

Parallel dazu wurde ein trockener 2-dm³-Autoklav zunächst mit Stickstoff und anschließend mit 10 g Accurel der Fa. Akzo sowie 200 ml flüssigem Propylen und 2,5 mmol Triisobutylaluminium-Lösung (als 2 molare Lösung in Varsol) befüllt. Dann wurden 1,034 g des geträgerten Katalysators und danach 0,030 mmol 1,4-Bis(dipentafluorophenylboran)-2,3,5,6-tetrafluorobenzol, gelöst in Toluol, in den Reaktor gegeben. 30 Minuten wurde ohne externe Heizung polymerisiert und danach weitere 90 Minuten bei 65°C und 25 bar. Gestoppt wurde die Polymerisation durch Abgasen des restlichen Propylens. Das Polymer wurde im Vakuumtrockenschrank getrocknet. Es resultieren 250 g Polypropylen-Pulver. Der Reaktor zeigte keine Beläge an Innenwand oder Rührer.

### Beispiel 16:

### Herstellung des geträgerten Katalysatorsystems:

3 g SiO₂, das bei 800°C dehydratisiert worden ist, wurden in Pentan suspendiert und mit 7,5 ml 20 %iger TEA-Lösung versetzt. Man isolierte den inertisierten Träger durch Abdekantieren, sechsmaliges Waschen mit Pentan und Entfernen von Lösungsmittelresten im Vakuum. Der Träger wurde in Toluol resuspendiert und mit einer Lösung von 200 mg Bis-[triphenylcarbenium]-[2,3,5,6-tetrafluorophenyl-1,4-bis-(tri(pentafluorophenyl)borat)] in warmem Toluol versetzt. Das Toluol wurde dann im Vakuum entfernt und man erhielt ein frei fließendes Pulver, das erneut in Pentan aufgenommen und mit 48 mg Cp₂HfMe₂ gelöst in Pentan versetzt wurde. Nach 15 Minuten Rühren wurde das Lösungsmittel im Vakuum entfernt.

### Polymerisation

Parallel dazu wurde ein trockener 1-dm³-Autoklav zunächst mit Stickstoff gespült. 300 ml absolutes Hexan wurden vorgelegt und 100 mg des obigen Katalysatorsystems suspendiert in 100 ml Hexan eingeschleust. 14 bar Ethylendruck wurden aufgepreßt und bei 60°C polymerisiert. Nach 20 Minuten wurde entspannt, auf Raumtemperatur abgekühlt und das erhaltene Polymer abfiltriert. Das Polymer wurde im Vakuumtrockenschrank getrocknet. Es resultierten 121 g Polyethylen.

### Beispiel 17:

### Herstellung des geträgerten Katalysatorsystems:

1 g SiO₂ wurden in Pentan suspendiert und mit 0,8 ml 20 %iger TEA-Lösung versetzt. Man isolierte den inertisierten Träger durch Abdekantieren, zweimaliges Waschen mit Pentan und Entfernen von Lösungsmittelresten im Vakuum. Der Träger wurde in Toluol resuspendiert und mit einer Lösung von 63 mg Bis[triphenylcarbenium]-[2,3,5,6-tetrafluorophenyl-1,4-bis(tri(pentefluorophenyl)borat)] in warmem Toluol versetzt. Das Toluol wurde dann im Vakuum entfernt und man erhielt ein frei fließendes Pulver, das erneut in Pentan aufgenommen und mit 15 mg rac-Dimethylsilyl-bis-(tetrahydroindenyl)zirkoniumdimethyl gelöst in Pentan versetzt wurde. Nach 15 Minuten Rühren wurde das Lösungsmittel im Vakuum entfernt.

### Polymerisation:

Parallel dazu wurde ein trockener 1-dm³-Autoklav zunächst mit Stickstoff, dann mit Propylen gespült. 300 ml flüssiges Propylen wurden vorgelegt und 912 mg des obigen Katalysators eingeschleust. Die Polymerisation wurde bei 40°C für 20 Minuten durchgeführt. Gestoppt wurde die Polymerisation durch Abgasen des restlichen Propylens. Das Polymer wurde im Vakuumtrockenschrank getrocknet. Es resultierten 378 g Polypropylen-Pulver. Der Reaktor zeigte keine Beläge an Innenwand oder Rührer.

## Patentansprüche

1. Geträgertes Katalysatorsystem, enthaltend mindestens eine Übergangsmetallverbindung der III., IV., V. oder VI. Nebengruppe des Periodensystems der Elemente, mindestens einen Cokatalysator mit der allgemeinen Formel (II) 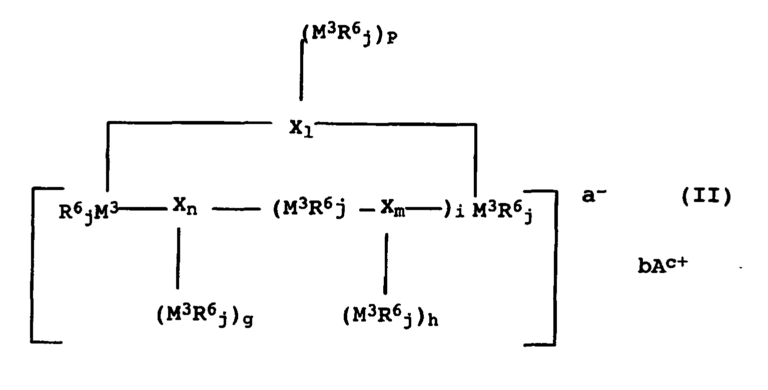 worin
R⁶ unabhängig voneinander gleich oder verschieden ein Halogenatom oder eine C₁-C₄₀-kohlenstoffhaltige Gruppe sind,
X unabhängig voneinander gleich oder verschieden eine C₁-C₄₀-Alkylen-, C₁-C₄₀-Halogenalkylen, C₆-C₄₀-Arylen, C₆-C₄₀-Halogenarylen-, C₇-C₄₀-Arylal- kylen- oder C₇-C₄₀-Halogenarylalkylen, C₂-C₄₀-Alkinylen-, C₂-C₄₀-Halogenalkinylen, C₂-C₄₀-Alkenylen- oder C₂-C₄₀-Halogen-Alkenylen- Gruppe oder eine C₁-C₄₀-Alkantriyl, C₁-C₄₀-Haloge- nalkantriyl-, C₆-C₄₀-Arentriyl-, C₆-C₄₀-Halogena- rentriyl-, C₇-C₄₀-Arenalkantriyl-, C₇-C₄₀-Halogena- renalkantriyl-, C₂-C₄₀-Alkintriyl-, C₂-C₄₀-Haloge- nalkintriyl-, C₂-C₄₀-Alkentriyl- oder C₂-C₄₀-Haloge- nalkentriyl-Gruppe sind,
M³ Bor bedeutet,
a, b und c gleich 0, 1 oder 2 sind und a = b · c ist,
n gleich 0 oder 1 ist,
m gleich 1 ist,
l gleich 0 oder 1 ist,
g, h und p gleich 0 oder 1 sind,
i gleich 0 oder 1 ist,
j gleich 2 oder 3 ist,
A ein Kation der Gruppe Ia, IIa, IIIa des Perioden- systems der Elemente, ein Carbenium-, Oxonium- oder Sulfoniumkation oder eine quartäre Ammonium- Verbindung ist,
wenn a=0 ist, so handelt es sich um eine neutrale chemische Verbindung, wenn a > =1 ist, so handelt es sich um eine negativ geladene Verbindung mit b Kationen A^{c+} als Gegenionen und wobei Übergangsmetallverbindungen und Cokatalysator (II) am Träger nicht kovalent gebunden sind und kein Aluminoxan als Cokatalysator enthalten ist und
wobei das Trägermaterial vor Inkontaktbringen mit der Übergangsmetallverbindung und dem Cokatalysator mit einer aluminium-, bor-, magnesium- oder siliziumorganischen Verbindung umgesetzt wird.

2. Geträgertes Katalysatorsystem nach Anspruch 1, wobei
R⁶ ein C₁-C₄₀-Kohlenwasserstoffrest, der mit Halogenen wie Fluor, Chlor, Brom oder Iod halogeniert oder perhaloge- niert sein kann, eine halogenierte oder perhalogenierte C₁-C₃₀-Alkylgruppe oder eine halogenierte oder perhaloge- nierte C₆-C₃₀-Arylgruppe bedeutet,
X eine C₆-C₃₀-Arylengruppe, eine C₂-C₃₀-Alkenylengruppe oder eine C₂-C₃₀-Alkinylengruppe bedeutet, die halogeniert oder perhalogeniert sein kann,
A Carbenium-Ionen (R₃C⁺) oder quartäre Ammonium-Ionen mit einer aciden H-Funktion (R₃NH⁺) ist.

3. Geträgertes Katalysatorsystem nach den Ansprüchen 1 bis 2, wobei
A quartäre Ammoniumsalze mit aciden H-Funktionen bedeutet.

4. Verfahren zur Herstellung eines geträgerten Katalysatorsystems nach einem oder mehreren der Ansprüche 1 bis 3, wobei mindestens eine Trägerkomponente mit mindestens einer Übergangsmetall- und mit mindestens einer Cokatalysatorkomponente (II) vermischt wird.

5. Verfahren nach Anspruch 4, wobei zunächst die Übergangsmetall- und die Cokatalysatorkomponente miteinander vermischt und dann der erhaltene kationische Komplex mit der Trägerkomponente vermischt werden.

6. Verfahren zur Herstellung eine Polyolefins, wobei ein oder mehrere Olefine in Gegenwart des erfindungsgemäßen Katalysatorsystems nach einem oder mehreren der Ansprüche 1 bis 3, polymerisiert werden.

7. Verwendung des Katalysatorsystems nach einem oder mehreren der Ansprüche 1 bis 3 zur Herstellung von Polyolefinen.

## Claims

1. A supported catalyst system containing at least one transition metal compound from subgroup III, IV, V or VI of the periodic table of elements, at least one cocatalyst of the general formula (II) 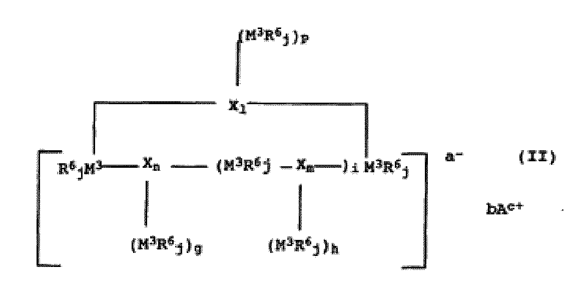 in which
R⁶ are mutually independently identically or differently a halogen atom or a C₁-C₄₀ carbon- containing group,
X are mutually independently identically or differently a C₁-C₄₀ alkylene, C₁-C₄₀ haloalkyl, C₆-C₄₀ arylene, C₆-C₄₀ haloarylene, C₇-C₄₀ arylalkyl or C₇-C₄₀ haloarylalkylene, C₂-C₄₀ alkynylene, C₂-C₄₀ haloalkynylene, C₂-C₄₀ alkenylene or C₂-C₄₀ haloalkenylene group or a C₁-C₄₀ alkanetriyl, C₁-C₄₀ haloalkanetriyl, C₆-C₄₀ arenetriyl, C₆-C₄₀ haloarenetriyl, C₇-C₄₀ arenealkanetriyl, C₇-C₄₀ haloarenealkanetriyl, C₂-C₄₀ alkynetriyl, C₂-C₄₀ haloalkynetriyl, C₂-C₄₀ alkenetriyl or C₂-C₄₀ haloalkenetriyl group,
M³ means boron,
a, b and c are equal to 0, 1 or 2 and a = b • c,
n is equal to 0 or 1,
m is equal to 1,
l is equal to 0 or 1,
g, h and p are equal to 0 or 1,
i is equal to 0 or 1,
j is equal to 2 or 3,
A is a cation of group Ia, IIa, IIIa of the periodic table of elements, a carbenium, oxonium or sulfonium cation or a quaternary ammonium compound,
if a=0, the compound is a neutral chemical compound, if is a>=1, it is a negatively charged compound with b cations A^{c+} as counterions and wherein transition metal compounds and cocatalyst (II) are not covalently bonded to the support and no aluminoxane is present as cocatalyst and
wherein, before being contacted with the transition metal compound and the cocatalyst, the support material is reacted with an organoaluminium, organoboron, organomagnesium or organosilicon compound.

2. A supported catalyst system according to claim 1, wherein
R⁶ means a C₁-C₄₀ hydrocarbon residue, which may be halogenated or perhalogenated with halogens such as fluorine, chlorine, bromine or iodine, a halogenated or perhalogenated C₁-C₃₀ alkyl group or a halogenated or perhalogenated C₆-C₃₀ aryl group,
X means a C₆-C₃₀ arylene group, a C₂-C₃₀ alkenylene group or a C₂-C₃₀ alkynylene group which may be halogenated or perhalogenated,
A is carbenium ions (R₃C⁺) or quaternary ammonium ions with an acidic H function (R₃NH⁺).

3. A supported catalyst system according to claims 1 to 2, wherein
A means quaternary ammonium salts with acidic H functions.

4. A method for producing a supported catalyst system according to one or more of claims 1 to 3, wherein at least one support component is mixed with at least one transition metal component and with at least one cocatalyst component (II).

5. A method according to claim 4, wherein the transition metal component and the cocatalyst component are first mixed with one another and then the resultant cationic complex is mixed with the support component.

6. A method for producing a polyolefin, wherein one or more olefins are polymerised in the presence of the catalyst system of the invention according to one or more of claims 1 to 3.

7. Use of the catalyst system according to one or more of claims 1 to 3 for producing polyolefins.

## Revendications

1. Système catalytique supporté, contenant au moins un composé à base d'un métal de transition du IIIème, IVème, Vème ou VIème groupe secondaire du système périodique des éléments, au moins un cocatalyseur présentant la formule générale (II) 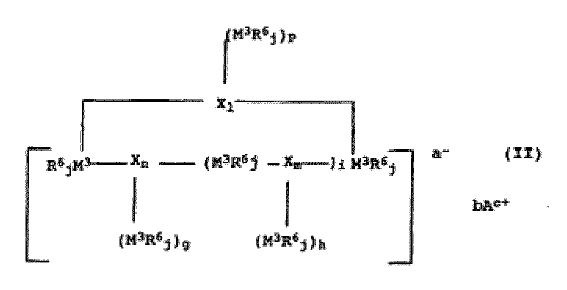 où les radicaux
R⁶ sont identiques ou différents et représentent, indépendamment l'un de l'autre un atome d'halogène ou un groupe carboné en C₁-C₄₀,
X sont identiques ou différents et représentent, indépendamment l'un de l'autre
un groupe C₁-C₄₀-alkylène, C₁-C₄₀-halogénoalkylène, C₆-C₄₀-arylène, C₆-C₄₀-halogénoarylène, C₇-C₄₀-arylalkylène ou C₇-C₄₀-halogénoarylalkylène, C₂-C₄₀-alcynylène, C₂-C₄₀-halogénoalcynylène, C₂-C₄₀-alcénylène ou C₂-C₄₀-halogénoalcénylène ou un groupe C₁-C₄₀-alcanetriyle, C₁-C₄₀-halogénoalcanetriyle, C₆-C₄₀-arènetriyle, C₆-C₄₀-halogénoarènetriyle, C₇-C₄₀-arène-alcanetriyle, C₇-C₄₀-halogénoarène-alcanetriyle, C₂-C₄₀-alcynetriyle, C₂-C₄₀-halogénoalcynetriyle, C₂-C₄₀-alcènetriyle ou C₂-C₄₀-halogénoalcènetriyle,
M³ signifie bore
a, b et c valent 0, 1 ou 2 et a = b • c,
n vaut 0 ou 1,
m vaut 1,
l vaut 0 ou 1,
g, h et p valent 0 ou 1,
i vaut 0 ou 1,
j vaut 2 ou 3,
A représente un cation du groupe Ia, IIa, IIIa du système périodique des éléments, un cation carbénium, oxonium ou sulfonium ou un composé d'ammonium quaternaire,
lorsque a = 0, il s'agit d'un composé chimique neutre, lorsque a ≥ 1, il s'agit d'un composé chargé négativement comprenant b cations A^{c+} comme contre-ions et les composés à base de métal de transition et le cocatalyseur (II) ne sont pas liés par covalence sur le support et de l'aluminoxane n'est pas contenu comme cocatalyseur et
le matériau support étant transformé avant la mise en contact avec le composé à base de métal de transition et le cocatalyseur étant transformé avec un composé organique de l'aluminium, du bore, du magnésium ou du silicium.

2. Système catalytique supporté selon la revendication 1, où
R⁶ signifie un radical hydrocarboné en C₁-C₄₀ qui peut être halogéné ou perhalogéné par des halogènes tels que le fluor, le chlore, le brome ou l'iode, un groupe C₁-C₃₀-alkyle halogéné ou perhalogéné ou un groupe C₆-C₃₀-aryle halogéné ou perhalogéné,
X signifie un groupe C₆-C₃₀-arylène, un groupe C₂-C₃₀-alcénylène ou un groupe C₂-C₃₀-alcynylène, qui peut être halogéné ou perhalogéné,
A représente des ions carbénium (R₃C⁺) ou des ions d'ammonium quaternaire présentant une fonction H acide (R₃NH⁺) .

3. Système catalytique supporté selon les revendications 1 à 2, où
A signifie des sels d'ammonium quaternaire présentant des fonctions H acides.

4. Procédé pour la préparation d'un système catalytique supporté selon l'une ou plusieurs des revendications 1 à 3, au moins un composé support étant mélangé avec au moins un composant à base d'un métal de transition et au moins un composant cocatalytique (II).

5. Procédé selon la revendication 4, dans lequel on mélange d'abord l'un avec l'autre le composant à base de métal de transition et le composant cocatalytique puis le complexe cationique obtenu est mélangé avec le composant support.

6. Procédé pour la préparation d'une polyoléfine, une ou plusieurs oléfines étant polymérisées en présence du système catalytique selon l'invention selon l'une ou plusieurs des revendications 1 à 3.

7. Utilisation du système catalytique selon l'une ou plusieurs des revendications 1 à 3 pour la préparation de polyoléfines.
